# EUROPEAN PATENT APPLICATION

(11) **EP 1 111 595 A1**
(43) Date of publication of application: **27.06.2001**
(21) Application number: 00935500.9
(22) Date of filing: 31.05.2000
(51) Int. Cl.: G11B 5/738, G11B 5/65, G11B 5/851

(54) **BASE FOR MAGNETIC RECORDING MEDIUM, MAGNETIC RECORDING MEDIUM, METHOD FOR PRODUCING THE SAME, AND MAGNETIC RECORDER**

(30) Priority: 31.05.1999 JP 15310599
(71) Applicant: TAKAHASHI, Migaku, Miyagi-ken 982-0222 (JP)
(72) Inventor: TAKAHASHI, Migaku, Miyagi-ken 982-0222 (JP)
(74) Representative: Dr. Weitzel & Partner
(86) International application number: JP0003501
(87) International publication number: WO0074043

(57) **Abstract**

An object of the present invention is to provide a substrate for magnetic recording medium, which is superior in magnetic characteristics and has a magnetic layer having a small ferromagnetic grain size capable of attaining low noise, a magnetic recording medium, and method of producing the same, and a magnetic recording device. The present invention is characterized in comprising a non-magnetic base and a non-magnetic coating layer formed to coat said base, said non-magnetic coating layer containing a metal which is capable of co-precipitating with Ni and has high affinity with oxygen. The metal contained in said coating layer preferably consists of one or more elements selected from P, Co, W, Fe, V, Cr, Mn, Cu, Zn, Mo, Pd, Sn, Re, Al, Zr, B, Ti, and Ta. It is preferable that the base is coated with an underlayer, a magnetic layer, and a protective layer, and that a magnetic head runs while flying above said protective layer in a state facing each other.

## Description

### BACKGROUND OF THE INVENTION

### TECHNICAL FIELD

The present invention relates to a substrate for a magnetic recording medium, which has a structure wherein a non-magnetic base is coated with a non-magnetic layer, a magnetic recording medium comprising the same and a method of producing the same, and a magnetic recording device. More particularly, the present invention relates to a substrate for a magnetic recording medium, wherein characteristics of a magnetic layer to be formed on a base can be improved by employing a technique of using a coating layer to be formed on the base surface as a special one and a technique of adsorbing oxygen on the base surface, a magnetic recording medium and a method of producing the same, and a magnetic recording device. The magnetic recording medium of the present invention is suited for use as a hard disk.

### DESCRIPTION OF THE RELATED ART

To realize an increase in the recording density of a magnetic recording medium having a magnetic layer, it is considered necessary to reduce the thickness of the magnetic layer and to refine ferromagnetic grains in view of reduction of media noise.

It has been known that the grain size of ferromagnetic grains can be reduced to some extent by reducing the thickness of the magnetic layer. However, there is a problem that the reduction of the thickness of the magnetic layer has a limitation in view of the volume of ferromagnetic grains upon consideration of formation of the microstructure and thermal agitation. Accordingly, it is considered necessary to reduce the grain size of ferromagnetic grains without changing the thickness of the magnetic layer.

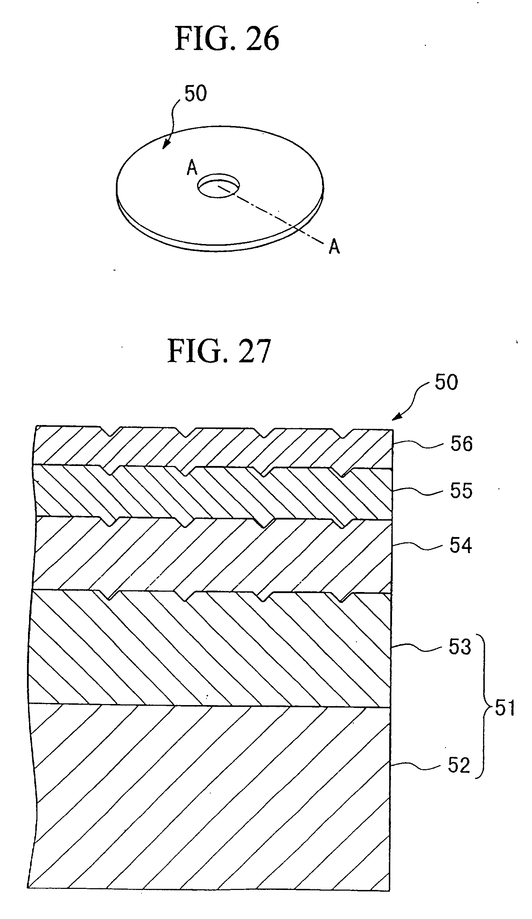

As shown in FIG. 26 and FIG. 27, there has hitherto been known a magnetic recording medium 50 obtained by forming a coating layer 53 of Ni-P on the surface of a non-magnetic base 52 made of an Al alloy or glass, forming an underlayer 54 made of a metal such as Cr or Cr alloy on the coating layer 53, and forming thereon a CoCrTa or CoCrTaPt magnetic layer 55 and a protective layer 56 of amorphous carbon. The thickness of the underlayer 54 of the metal is adjusted within a range from 10 to 50 nm, the thickness of the magnetic layer 55 is adjusted within a range from 10 to 30 nm, and the thickness of the protective layer 56 is adjusted within a range from 10 to 30 nm. Furthermore, the underlayer 54 is formed to improve magnetic characteristics by adjusting the crystallographic orientation of the magnetic layer 55 and to control the grain size of the magnetic layer 55.

According to the present inventors' report appearing in Applied Physics, Vol. 65, No. 12 (published on December, 1996), entitled "Ultra Clean Process and Thin Film Magnetic Recording Medium", it is considered that a magnetic layer made of a CoNiCr alloy should intrinsically exhibit an ideal isotropic coercive force of about 3000 Oe, while a magnetic layer made of a CoCrTa alloy should intrinsically exhibit an ideal isotropic coercive force of about 2500 Oe.

However, these magnetic layers produced by a conventional general sputtering method has, for example, the problem that the magnetic layer made of the CoNiCr alloy can exhibit a coercive force of about 1200 Oe, while the magnetic layer made of the CoCrTa alloy can exhibit a coercive force of about 1800 Oe because segregation of Cr at the grain boundaries between ferromagnetic grains of the magnetic layer cannot be improved.even if the process is improved by employing various technologies such as control of the base temperature during the film formation, application of negative bias and the like.

An ideal structure for magnetic layer is considered to be a structure wherein ferromagnetic grains, which shows magnetization, are sufficiently refined and the ferromagnetic grains are isolated from each other by the existence of a non-magnetic grain boundary layer at grain boundaries between the ferromagnetic grains and, furthermore, magnetic exchange interactions between ferromagnetic grains are reduced. Accordingly, it is considered in the magnetic layer with the above composition that Cr is efficiently precipitated and segregated at grain boundaries between ferromagnetic grains.

There was a problem that the grain size of ferromagnetic grains of this kind of magnetic layer obtained by a conventional method vary drastically. Moreover, the recorded information disappears and the signal to noise ratio S/N is reduced due to thermal agitation, because the segregation of Cr at grain boundaries cannot be improved. Furthermore, large variation of the grain size of ferromagnetic grains in the magnetic layer means that a lot of ferromagnetic grains having a large grain size. The existence of ferromagnetic grains having a large grain size means a large media noise, thereby reducing the S/N ratio.

In light of the background described above, the present inventors have reported in Applied Physics, Vol. 68, No. 2 (published on February, 1999), entitled "Physics of High-Density Thin Film Magnetic Recording Medium" that the existence of oxygen as an impurity during the sputtering inhibits Cr segregation at grain boundaries.

In the report of the study, the present inventors have suggested a so-called ultra clean process capable of controlling the oxygen concentration of the magnetic layer to 100 ppm or less by weight in Japanese Patent Application, Second Publication No. Hei 2-806443 and Japanese Patent Application, Second Publication No. Hei 9-138934.

As used herein, the term "Ultra Clean Process" refers to a process which exclusively enhances an ultimate vacuum degree in a film forming chamber from the order of 1 × 10⁻⁷ Torr (the order of 133 × 10⁻⁷ Pa) to the order of 3 × 10⁻⁹ Torr (the order of 399 × 10⁻⁹ Pa) and reduces the concentration of impurities such as water in a high-purity Ar gas to the order of 1 ppb, which is two orders of magnitude smaller than a conventional high-purity Ar gas, and which can produce a magnetic layer having magnetic characteristics which are noticeably superior to the prior art. By employing this ultra clean process, it is made possible to attain the isotropic coercive force of 2000 Oe in the magnetic layer made of the CoNiCr alloy and the isotropic coercive force of 2300 Oe in the magnetic layer made of the CoCrTa alloy.

By employing this ultra clean process, it is made possible to improve Cr segregation at the magnetic grain boundary of the magnetic layer, thus making it possible to attain an intrinsic coercive force of the magnetic layer. However, there is the problem that the uniform grain size of ferromagnetic grains of the current magnetic layer is not necessarily sufficiently realized in case higher density of the magnetic recording medium must be enhanced.

An object of the present invention is to provide a substrate for a magnetic recording medium on which a magnetic layer should be formed, capable of refining the grain size of the magnetic layer to be formed, thereby making the range of the grain size distribution narrow and reducing the noise.

Another object of the present invention is to provide a magnetic recording medium having a high coercive force, capable of refining the grain size of the magnetic layer, thereby making the range of the grain size distribution narrow and reducing the noise.

Still another object of the present invention is to provide a method of producing a magnetic recording medium having a high coercive force, capable of refining the grain size of the magnetic layer, thereby making the range of the grain size distribution narrow and reducing the noise.

Yet another object of the present invention is to provide a magnetic recording device provided with a magnetic recording medium having a high coercive force, capable of refining the grain size of the magnetic layer, thereby making the range of the grain size distribution narrow and reducing the noise.

### SUMMARY OF THE INVENTION

The substrate for magnetic recording medium of the present invention has been made in light of the circumstances described above and has the feature that it comprises a non-magnetic base and a non-magnetic coating layer formed to coat said base, said non-magnetic coating layer containing a metal which is capable of co-precipitating with Ni and has high affinity with oxygen.

In the present invention, said metal may consist of one or more elements selected from P, Co, W, Fe, V, Cr, Mn, Cu, Zn, Mo, Pd, Sn, Re, Al, Zr, B, Ti, and Ta.

The present invention may have the feature that said coating layer is any one of a Ni-P-Co amorphous film, a Ni-Ta-Co amorphous film, and a Ni-Ti-Co amorphous film.

The present invention may have a feature that said coating layer is represented by the composition formula of NiCoPM and said M consists of one or more elements selected from Ti, Zr, Hf, V, Nb, Mo, Ta, W, Al, and B.

The present invention may have a feature that said coating layer contains 0.003-0.10% by weight of Co.

When the coating layer on the base contains a metal which is capable of co-precipitating with Ni and has high affinity with oxygen, it is made possible to control the grain size of the underlayer to be formed on the coating layer and to control the grain size of the magnetic layer to be formed on the underlayer.

The magnetic recording medium of the present invention has been made in light of the circumstances described above and has the feature that oxygen is intermittently adsorbed on the surface of said coating layer.

Oxygen adsorbed on the surface of the coating layer serves as a suppression point, i.e. pinning point for the coarsening of grains of the underlayer to be formed thereon, thereby refining the grains of the underlayer. When the magnetic layer is formed on the underlayer, the magnetic layer is formed while growing epitaxially on the fine grains of the underlayer and, therefore, the grains of the magnetic layer are also refined. As a result, there can be obtained a magnetic layer which has refined grains, narrow grain size distribution, and low noise.

The oxygen adsorbed on the surface of the coating layer on the base serves as a suppression point, i.e. pinning point for coarsening of the grains of the underlayer to be formed thereon, thereby refining the grains of the underlayer formed on the coating layer. Since the magnetic layer formed on the underlayer is a layer is formed while growing epitaxially on the fine grains of the underlayer, the grains of the magnetic layer are also refined. As a result, there can be obtained a magnetic recording medium provided with a magnetic layer which has refined grains, a narrow grain size distribution, and low noise.

The present invention may have the feature that the base provided with said coating layer is coated with an underlayer, a magnetic layer, and a protective layer, and a magnetic head runs while floating magnetically above said protective layer in a state of facing each other.

In the present invention, a magnetic recording medium may have the feature that it comprises a substrate comprising a non-magnetic base and a non-magnetic coating layer formed on said base, and an underlayer, a magnetic layer, and a protective layer, which are formed on said substrate, said non-magnetic coating layer containing a metal which is capable of co-precipitating with Ni and has high affinity with oxygen.

The present invention may have a feature that said metal consists of one or more elements selected from P, Co, W, Fe, V, Cr, Mn, Cu, Zn, Mo, Pd, Sn, Re, Al, Zr, B, Ti, and Ta.

In the present invention, said coating layer may be any one of a Ni-P-Co amorphous film, a Ni-Ta-Co amorphous film, and a Ni-Ti-Co amorphous film.

The present invention may have a feature that said coating layer is represented by the composition formula of NiCoPM and said M consists of one or more elements selected from Ti, Zr, Hf, V, Nb, Mo, Ta, W, Al, and B.

The present invention may have a feature that said coating layer contains 0.003-0.10% by weight of Co.

The present invention may have the feature that oxygen adsorbed on the surface of said coating layer serves as a pinning point for suppressing coarsening of ferromagnetic grains constituting said magnetic layer.

The present invention may have a feature that oxygen is adsorbed on the surface of said coating layer and the adsorbed site of said oxygen is located at a grain boundary of grains constituting said underlayer and, furthermore, said magnetic layer grows epitaxially on said underlayer.

In the present invention, a magnetic recording medium may have the feature that it comprises a substrate comprising a non-magnetic base and a non-magnetic coating layer formed on said base, and an underlayer, a magnetic layer and a protective layer, which are formed on said substrate, said magnetic layer having a structure which does not include coarse ferromagnetic grains having a mean grain size which is two or more times larger than that of ferromagnetic grains constituting the principal portion of the magnetic layer.

The present invention may be a method of producing a magnetic recording medium comprising a substrate comprising a non-magnetic base and a non-magnetic coating layer formed on said base, and an underlayer, a magnetic layer and a protective layer, which are formed on said substrate in this order, said method comprising: the pumping step of pumping out a layer forming space in which said substrate is formed to a vacuum degree in the order of 10⁻⁹ Torr or less, the cleaning step of introducing an inert gas into said layer forming space to generate plasma and subjecting the surface of the coating layer constituting said substrate to dry-etching, and further comprising: the exposure step of introducing a gas containing at least oxygen into said film forming space so as to attain a pressure higher than the vacuum degree of said pumping step, and exposing the surface of said coating layer to a gas atmosphere containing said oxygen, and the film forming step of depositing said underlayer on the substrate subjected to said exposure step by means of a dry process.

The present invention may have the feature that a thin film containing a metal, which is capable of co-precipitating with Ni and has high affinity with oxygen, is used as said coating layer.

The present invention may be a method wherein a thin film, which contains Cr as a principal constituent element, is used as said underlayer.

The present invention may have the feature that a Ni-P-Co amorphous film, a Ni-Ta-Co amorphous film, or a Ni-Ti-Co amorphous film is used as said coating layer.

In the present invention, said exposure step has the feature that the surface of said coating layer is exposed to an oxygen atmosphere under a predetermined pressure for a predetermined time so that the quantity of exposure of the surface of said coating layer becomes 30 Langmuirs (where 1 Langmuir = 1 × 10⁻⁶ Torr·sec = 133 × 10⁻⁶ Pa·sec) or less.

The present invention may have the feature that the quantity of Co contained in said coating layer is adjusted within a range from 0.003 to 0.10% by weight.

In the present invention, a magnetic recording device may have the feature that it comprises the magnetic recording medium of any one of aforementioned claims, a driving section for driving said magnetic recording medium, a magnetic head, and a moving means for moving said magnetic head relative to said magnetic recording medium.

It is considered that, by pumping out a film forming space to the vacuum degree in the order of 1 × 10⁻⁹ Torr (the order of 133 × 10⁻⁹ Pa) or less, subjecting the substrate to dry-etching, introducing oxygen into the film forming space, and adsorbing oxygen on a coating layer, the surface of the coating layer can be completely cleaned by dry-etching, and oxygen is physically adsorbed on the surface of the coating layer, thereby forming sites wherein oxygen is present.

When an underlayer is formed on the coating layer having the sites, the grain size of the underlayer can be refined. Ferromagnetic grains of the magnetic layer to be formed thereon can also be refined because grains of the underlayer can be refined. A method to suppress the coarsening of grains, which utilizes the site of oxygen adsorbed on the coating layer, can make the grain size distribution of ferromagnetic grains constituting the magnetic layer narrow and reduce the number of coarsened grains, thus making it possible to obtain a magnetic layer having a low noise.

### BRIEF DESCRIPTION OF THE DRAWINGS

FIG. 1A is a cross-sectional view of the magnetic recording medium of the first embodiment according to the present invention, and FIG. 1B is a schematic structure view showing a model of a crystal structure of an underlayer and a magnetic layer of the magnetic recording medium.

FIG. 2 is a side cross-sectional view showing an example of a magnetic recording device according to the present invention.

FIG. 3 is a plain cross-sectional view of the magnetic recording device shown in FIG. 2.

FIG. 4A to FIG. 4C shows the dependence of the quantity of oxygen exposure on the grain size of a magnetic layer in the first embodiment of the magnetic recording medium according to the present invention, in which FIG. 4A shows a metallurgical structure photograph in case the quantity of exposure is 0 L, FIG. 4B shows a metallurgical structure photograph in case the quantity of exposure is 1.5 L, and FIG. 4C shows a metallurgical structure photograph in case the quantity of exposure is 3.5 L.

FIG. 5 is a graph showing an X-ray diffraction pattern of a magnetic layer on an underlayer when dry-etching was conducted immediately before forming the underlayer using the UC-Process and the base surface was exposed to oxygen, and then the quantity of adsorption was changed within a range from 0 L to 25 L.

FIG. 6 is a graph showing the dependence of the coercive force on magnetic layer thickness at 300 K and 5 K in a magnetic recording medium comprising an underlayer and a magnetic layer, which has a laminated structure and the composition of Cr/CoNi_{12.5}Cr₁₅Ta_{3.5}Pt₅.

FIG. 7 is a graph showing the population distribution of the ferromagnetic grain size of a magnetic layer in a laminated structure of Cr/CoNi_{12.5}Cr₁₅Ta_{3.5}Pt₅ of the embodiment made at a quantity of oxygen exposure of 0 L using UC-Process.

FIG. 8 is a graph showing the population distribution of the ferromagnetic grain size of a magnetic layer in a laminated structure of Cr/CoNi_{12.5}Cr₁₅Ta_{3.5}Pt₅ of the embodiment made at a quantity of oxygen exposure of 3.5 L using UC-Process.

FIG. 9 is a graph showing the population distribution of the ferromagnetic grain size of a magnetic layer in a laminated structure of Cr/CoNi_{12.5}Cr₁₅Ta_{3.5}Pt₅ of the embodiment made at a quantity of oxygen exposure of 0 L, 1.5 L, and 3.5 L using UC-Process.

FIG. 10 is a graph showing the dependence of the coercive force on the quantity of oxygen exposure in a magnetic recording medium comprising an underlayer and a magnetic layer, which has a laminated structure and a composition of Cr/CoNi_{12.5}Cr₁₅Ta_{3.5}Pt₅ of the embodiment obtained by exposing the base surface to oxygen immediately after conducting dry-etching of the base and immediately before forming an underlayer of Cr.

FIG. 11 is a graph showing data wherein the quantity of oxygen absorption of the shown in FIG. 10 are indicated in an enlarged state at the quantity of exposure within a range from 0 L to 5 L, together with the coercive force of a magnetic recording medium in case the thickness of a magnetic layer is 15 nm.

FIG. 12 is a graph showing the dependence of the coercive force on the quantity of oxygen adsorption at 5 K and 300 K in a magnetic recording medium of the embodiment in case the thickness of a magnetic layer is 15 nm and 30 nm.

FIG. 13 is a graph showing the signal to noise ratio (S/Nₘ = signal/(noise of magnetic recording medium) of a magnetic recording medium comprising an underlayer and a magnetic layer, which has a laminated structure and a composition of Cr/CoNi_{12.5}Cr₁₅Ta_{3.5}Pt₅ of the embodiment, against the quantity of oxygen to be adsorbed onto the base surface.

FIG. 14 is a graph showing the dependence of the normalized media noise (Nₘ/V) on the quantity of oxygen exposure of a magnetic recording medium comprising an underlayer and a magnetic layer, which has a laminated structure and a composition of Cr/CoNi_{12.5}Cr₁₅Ta_{3.5}Pt₅ of the embodiment.

FIG. 15A and 15B shows the dependence of the grain size on the Co content of a magnetic medium in the second embodiment of a magnetic recording medium according to the present invention in case the quantity of oxygen exposure is 1.5 L, in which FIG. 15A shows a metallurgical structure photograph in the case that the Co content is 0 ppm, and FIG. 15B shows a metallurgical structure photograph in the case that the Co content is 30 ppm.

FIG. 16A and 16B shows the dependence of the grain size on the Co content of a magnetic medium in the second embodiment of a magnetic recording medium according to the present invention in the case that the quantity of oxygen exposure is 1.5 L, in which FIG. 16A shows a metallurgical structure photograph in the case that the Co content is 100 ppm, and FIG. 16B shows a metallurgical structure photograph in the case that the Co content is 300 ppm.

FIG. 17 is a graph showing an X-ray diffraction pattern when the quantity of the oxygen exposure onto the base surface of the second embodiment was adjusted to 1.5 L and the Co content in the coating layer of the base surface was changed.

FIG. 18 is a graph showing a population distribution of a ferromagnetic grain size of a magnetic layer in a laminated structure of Cr/CoNi_{12.5}Cr₁₅Ta_{3.5}Pt₅ of the second embodiment made at the quantity of oxygen exposure of 1.5 L and the Co content of 0 ppm in the coating layer using the UC-Process.

FIG. 19 is a graph showing a population distribution of a ferromagnetic grain size of a magnetic layer in a laminated structure of Cr/CoNi_{12.5}Cr₁₅Ta_{3.5}Pt₅ of the second embodiment made at the quantity of oxygen exposure of 1.5 L and the Co content of 100 ppm in the coating layer using the UC-Process.

FIG. 20 is a graph showing a population distribution of a ferromagnetic grain size of a magnetic layer in a laminated structure of Cr/CoNi_{12.5}Cr₁₅Ta_{3.5}Pt₅ of the second embodiment made at the quantity of oxygen exposure of 1.5 L and the Co content of 0, 30, 100 and 300 ppm in the coating layer using the UC-Process.

FIG. 21 is a graph showing the dependence of the coercive force on the quantity of oxygen adsorption in a magnetic recording medium comprising an underlayer and a magnetic layer, which has a laminated structure and a composition of Cr/CoNi_{12.5}Cr₁₅Ta_{3.5}Pt₅ of the embodiment obtained by exposing the base surface with each quantity of Co addition (0, 30, 100, 300 ppm) to oxygen immediately after conducting dry-etching of the base surface having the Ni-P-Co film of the second embodiment and immediately before forming an underlayer of Cr.

FIG. 22 is a graph showing the dependence of the coercive force on Co addition at 300 K in a magnetic recording medium comprising an underlayer and a magnetic layer, which has a laminated structure and a composition of Cr/CoNi_{12.5}Cr₁₅Ta_{3.5}Pt₅ of the embodiment obtained by exposing the base surface with each quantity of Co (0, 30, 100, 300 ppm) added to oxygen with the quantity of 1.5 L and 3.5 L immediately after conducting dry-etching in the second embodiment and immediately before forming an underlayer of Cr.

FIG. 23 is a graph showing the dependence of the coercive force on the quantity of the Co addition at 5 K and 300 K in a magnetic recording medium comprising an underlayer and a magnetic layer, which has a laminated structure and a composition of Cr/CoNi_{12.5}Cr₁₅Ta_{3.5}Pt₅ of the embodiment obtained by exposing the base surface with each quantity of Co addition (0, 30, 100, 300 ppm) to oxygen with the quantity of 1.5 L and 3.5 L immediately after conducting dry-etching in the second embodiment and immediately before forming an underlayer of Cr.

FIG. 24 is a graph showing the signal to noise ratio (S/Nₘ) of a magnetic recording medium comprising an underlayer and a magnetic layer, which has a laminated structure and a composition of Cr/CoNi_{12.5}Cr₁₅Ta_{3.5}Pt₅ of the second embodiment, with respect to the kinds of a base (quantity of Co addition: 30, 100, 300 ppm).

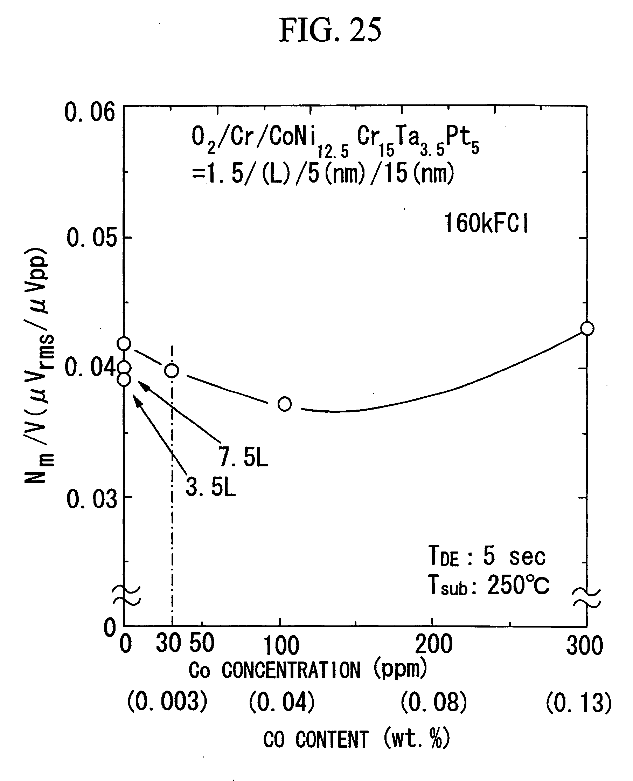

FIG. 25 is a graph showing the dependence of normalized media noise (Nₘ/V) on Co content of a magnetic recording medium comprising an underlayer and a magnetic layer, which has a laminated structure and the composition of Cr/CoNi_{12.5}Cr₁₅Ta_{3.5}Pt₅ of the second embodiment.

FIG. 26 is a perspective view showing an example of a conventional general magnetic recording medium.

FIG. 27 is a cross-sectional view taken along lines A-A of FIG. 26.

FIG. 28 is a graph showing the oxygen concentration distribution, the Co concentration distribution, the Cr concentration distribution and the Ni concentration contribution in the depth direction of a magnetic recording medium wherein an underlayer of Cr was formed on a NiP coating layer, and a CoCrTa magnetic layer was formed thereon.

FIG. 29 is a graph showing the dependence of the S/N ratio on the quantity of oxygen exposure in a magnetic recording media of the embodiments and comparative embodiments.

FIG. 30 is a graph showing the dependence of the coercive force Hc, and the thermal fluctuation constants V_{act}Ku^{grain}/kT on the quantity of oxygen exposure, in the magnetic recording media of the embodiments and the comparative embodiments.

FIG. 31 is a graph showing the dependence of the S/N ratio on Co concentration in the magnetic recording medium of the embodiment in case the quantity of oxygen exposure is 1.5 L.

FIG. 32 is a graph which shows the dependence of the coercive force Hc and the magnetic intergranular interaction index GD_{act}/GD on Co concentration in a magnetic recording medium of the embodiment in the case that the quantity of oxygen exposure is 1.5 L and that the "Brt", which is the product of the remanent magnetization Br and the film thickness t, of the evaluated samples is about 55 G*µ*m.

FIG. 33 is a graph showing the dependence of the coercive force on the quantity of oxygen exposure in the magnetic recording media of the embodiments and the magnetic recording media of the comparative embodiments.

FIG. 34 is a graph showing the dependence of the resolution on the quantity of oxygen exposure in the magnetic recording media of the embodiments and the magnetic recording media of the comparative embodiments.

FIG. 35 is a graph showing the dependence of the S/N ratio on the quantity of oxygen exposure in the magnetic recording media of the embodiments and the magnetic recording media of the comparative embodiments.

FIG. 36 is a graph showing the relationship between the S/N ratio and the resolution in the magnetic recording media of the embodiments and the magnetic recording media of the comparative embodiments.

FIG. 37 is a graph showing the relationship between the S/N ratio and the resolution in the magnetic recording media of the embodiments and the magnetic recording media of the comparative embodiments.

### PREFERRED EMBODIMENTS OF THE INVENTION

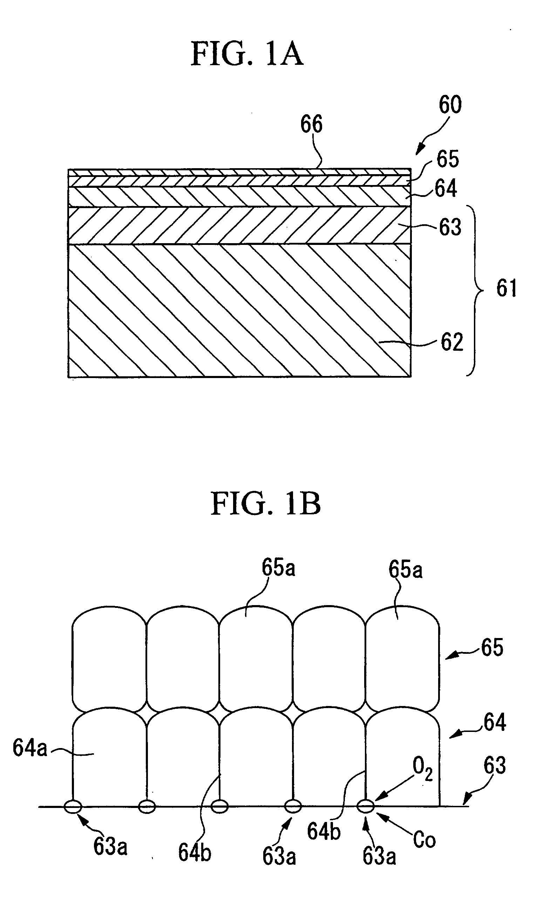

FIG. 1 is a cross-sectional structure of an embodiment wherein a magnetic recording medium of the present invention is applied to the HDD (hard disk) of a computer (information processing device), and a magnetic recording medium 60 of this embodiment has a structure comprising a substrate 61 that comprises a base 62 made of a disk-shaped non-magnetic material and a non-magnetic layer 63 formed on the base, and a ferromagnetic metal magnetic layer (magnetic recording layer) 65 and a protective layer 66 laminated on the substrate 61 via a metallic underlayer 64.

The laminated structure of the magnetic recording medium 60 of this embodiment shown in FIG. 1 is the most general structure of magnetic recording medium such that the other intermediate layer is optionally formed between the base 62 and the protective layer 66, and such that a lubricating layer made of a fluorocarbon is formed on the protective layer 66 as a matter of course.

The magnetic recording medium 60 of this embodiment is a magnetic recording medium comprising a substrate 61 and a coating layer 63 made of a ferromagnetic metal formed on the substrate 61 via a metallic underlayer 64, a very small amount of quantity within a proper range of an additive element being added in the coating layer 63. The additive element is preferably an element capable of co-precipitating with Ni and having high affinity with oxygen. Specifically, the elements are one or more elements selected from P, Co, W, Fe, V, Cr, Mn, Cu, Zn, Mo, Pd, Sn, Re, Al, Zr, B, Ti, and Ta. Among these elements, the most preferred element is Co, which easily co-precipitates with Ni and has a high affinity with oxygen.

The magnetic recording medium 60 as the embodiment of the present invention will be described in more detail.

### (Substrate)

The substrate 61 in the present invention includes, for example, those obtained by coating the base surface 62 made of aluminum and alloys or oxides thereof, titanium and alloys or oxides thereof, or silicone, glass, carbon, ceramic, plastic, resin and composites thereof with a non-magnetic layer 63 made of a different kind of a material using a film forming method such as sputtering method, vacuum vapor deposition method, or plating method.

It is preferable that non-magnetic layer 63 formed on the surface of the substrate 61 is not magnetized at a high temperature, has electric conductivity, and is also easily machined, while it has proper surface hardness. A Ni-P amorphous thin film, Ni-Ta film, or Ni-Ti film formed by the plating method is preferable as the non-magnetic layer which satisfies these conditions. In the present invention, it is preferable to add the above additive element in the proportion of 0.10% or less by weight, more preferably within a range from 0.003 to 0.03% by weight, and most preferably within a range from 0.003 to 0.02% by weight, relative to the film with the composition.

Among these films, while a Ni-P amorphous film is not easily magnetized at a high temperature, has conductivity, and is easy to process, it is widely used as a material having a proper surface hardness. Therefore, it is preferable to use a Ni-P amorphous film, or an amorphous thin film obtained by adding a predetermined quantity of an additive element such as Co to the amorphous thin film.

In case of an application for a disk, a doughnut-disk-shaped substrate, 61 is used. A substrate with a magnetic layer described hereinafter, i.e. a magnetic recording medium, is used while rotating about the center of the disk, which serves as an axis, at a speed within a range from 3600 to 15000 rpm during the magnetic recording and reproduction. At this time, a magnetic head flies on the surface or back surface of the magnetic recording medium at a height of about 0.1 *µ*m or several tens of nm. In the case of lower flying height, a magnetic head capable of flying at a height of about 10 nm has also been developed.

Accordingly, the base 62 may be preferably a base wherein the evenness of the surface or back surface, parallelism between both of the surface and back surface, waviness of the substrate in a circumferential direction, and roughness of the surface and back surface are properly controlled.

In case the substrate 61 rotates and stops, the surface of the magnetic recording medium and the surface of the magnetic head contact and slide on each other (Contact Start Stop, hereinafter referred to as "CSS"). To cope with CSS, slight concentric.scratches (texture) are sometimes formed on the surface 61 of the substrate due to the polishing using a diamond slurry or tape, thereby to prevent stiction of the magnetic head landed on the medium.

Since a V-shaped texture is generally formed by scratching the top of a non-magnetic Ni-P layer 53 using an abrasive paper, as shown in a conventional structure in FIG. 27, a texture may be formed on the surface of the non-magnetic layer 63 made of Ni-P in the structure of this embodiment. There is also known a structure wherein a texture by means of laser machining, a scattered uneven film texture by means of sputtering, or an uneven texture by means of etching of a protective layer is formed in place of a texture by means of a diamond slurry or tape. Therefore, unevenness having a desired shape may be formed on the top of the coating layer 63 by employing such a structure, as a matter of course. Also there has recently been developed a structure wherein a magnetic head is on standby outside a magnetic recording medium using a load/unload system, so that the texture can also be omitted when employing such a system.

### (Metallic underlayer)

A metallic underlayer 64 used in this embodiment includes, for example, Cr and an alloy thereof. In case of the alloy, combinations with Mo, W, Ti, V, Nb and Ta are employed. More specifically, a CrMo alloy, a CrW alloy, a CrTi alloy, and a CrV alloy are applied. The thickness is preferably adjusted within a range from 2.5 to 50 nm.

Cr is particularly preferable because it causes a segregation action to a ferromagnetic metal magnetic layer 65 described hereinafter. These materials are widely used because they are mass-produced, and a sputtering method and a deposition method are used as the film forming method. This metallic underlayer 64 serves to promote the grain growth of the ferromagnetic metal magnetic layer 65 so that an axis of easy magnetization of the ferromagnetic metal magnetic layer 65 is in the longitudinal direction of the substrate, that is, the coercive force in the longitudinal direction of the substrate increases when the ferromagnetic metal magnetic layer 65 is formed on the metallic underlayer 64.

When using the glass plate as the substrate, one or more Ni-Al seed layers may be further formed under the metallic underlayer.

In case the metallic underlayer 64 made of Cr is formed, a film forming factor capable of controlling the crystallizability includes, for example, the surface configuration, the surface condition, or the surface temperature of the substrate, the gas pressure during the film forming, the bias applied to the substrate, and the thickness of the film to be formed.

Although the coercive force of the ferromagnetic metal magnetic layer 65 described hereinafter tends to increase in proportion to the film thickness of Cr, the surface roughness of the medium tends to increase with the increase of the thickness of Cr underlayer. However, it is required to reduce the flying height of the magnetic head from the surface of the magnetic recording medium as low as possible in order to improve the recording density. Accordingly, preferred is a metallic underlayer 64 made of a material which makes it possible to obtain a high coercive force regardless of the thickness of the metallic underlayer 64.

In the magnetic recording medium 60 of the present invention, a model form of an ideal structure is a structure wherein a large number of oxygen is intermittently adsorbed at the section where Co atoms are present on the top of the amorphous coating layer 63 and the adsorption points 63a (see FIG. 1B) are located at grain boundaries of the underlayer 64 formed thereon. As shown in FIG. 1B, a model form is a structure wherein the position of grain boundaries 64b of the grain 64a, which constitute the underlayer 64, preferably agrees with the above adsorption point 63a.

A large amount of oxygen, which is intermittently present, being adsorbed by Co located on the top of the coating layer 63, serves as a pinning point for suppressing coarsening of the ferromagnetic grain 64a of the underlayer 64. Accordingly, ideally, as shown in FIG. 1B, the position of grain boundaries 64b of the grain 64a of the underlayer 64 should agree with that of the adsorption point 63a of oxygen. However, in reality, the positions of all grains 64a do not always agree with that of the adsorption point 63a of oxygen. Therefore a portion or majority of grains 64, which are coarsened, grow over the adsorption point 63a of oxygen and are likely to be present. Therefore, the structure as shown in FIG. 1B becomes the form of an ideal model, though the entire ideal structure as shown in FIG. 1B is not applicable.

There also exists a process wherein the grain growth start to be suppressed only when the grain grows over the adsorption point 63a of oxygen, which results in grain refinement because coarsening of the grain 64a is suppressed by the adsorption point 63a of oxygen. Therefore, a model structure, wherein the grain boundaries of the grain 64 are located at an intermediate point of the adsorption point 63a of oxygen, is also considered to be another model form.

The width of grain boundaries 64b around the grain 64a, drawn in FIG. 1B, is drawn smaller than the actual width for easy understanding. It can be considered that a grain boundary having a width, which is a fraction of the width of the grain 64a, is present around grain boundaries in the actual structure, and various substances such as precipitates and compounds of other elements are present at the grain boundary section.

### (Ferromagnetic metal magnetic layer)

As the magnetic layer made of the above ferromagnetic alloy used in this embodiment, magnetic layers made of CoCrTa, CoCrTaPt, CoCrNi and CoNiCrTaPt ferromagnetic metallic materials known widely as a magnetic layer for this kind of a magnetic recording medium are used. The thickness is preferably within a range from 10 to 30 nm.

It is also possible to use, as the magnetic layer 65, a magnetic layer, which is a kind of a ternary ferromagnetic alloy magnetic layer, with a composition which represented by the general formula:
COₓCr_{y}Ge_{z}where x, y and z, which represent a composition ratio, satisfy the relationships: 78 ≦ x ≦ 87, 2.5 ≦ y ≦ 14.5, 3.5 ≦ z ≦ 15, and x + y + z = 100 (provided that x, y, and z represent a composition ratio in terms of atomic %). This ternary ferromagnetic alloy magnetic layer is a material which was suggested by the present inventors in Japanese Patent Application No. Hei 11-135038 (filed on May 14, 1999), and also has excellent magnetic characteristics which have never been attained by a conventional material. As is apparent from the subsequent study, x, y and z, which represent a composition ratio, may satisfy the relationships: 78 ≦ x ≦ 87, 2.5 ≦ y ≦ 25, and 2.0 ≦ z ≦ 15 in case of the above ternary magnetic layer. Therefore, the composition within this range may be employed.

### (Improvement of recording density in magnetic recording medium)

The magnetic recording medium 60 in the present invention is preferably a magnetic recording medium (longitudinal magnetic recording medium) capable of forming recording magnetization parallel to the film surface of the ferromagnetic metal magnetic layer 65 described above. In case of such a magnetic recording medium, the size of the recording magnetization must be reduced to improve the recording density.

Size reduction of the recording magnetization decreases leakage flux of each recording magnetization, thereby to decrease a regenerative signal output in the magnetic head. Accordingly, it is desirable to further reduce the media noise which is considered to be caused by the interference of adjacent recording magnetization.

The case of a magnetic recording medium produced with the above construction will be described below.

After preparing a base such as non-magnetic aluminum, the base was degreased, etched, treated with zincate, and then plated with NiCoP using a plating solution prepared by adding cobalt sulfate to a plating solution (trade name of Meltex Ni-422) to form a Ni-P coating layer containing a predetermined quantity of Co on a base, which is subjected to a heat treatment for degassing in the film by heating to about 250°C, thus obtaining a base with a coating layer.

The Co content can be easily adjusted within a range from 0.003 to 0.10% by weight by adjusting the concentration of Co in the plating solution within a range from 30 to 1000 ppm. For example, a film containing 0.001% by weight of Co can be obtained by adding 10 ppm of Co to a Co plating bath, a film containing 0.003% by weight of Co can be obtained by adding 30 ppm of Co to a plating bath, a film containing 0.04% by weight of Co can be obtained by adding 100 ppm of Co to a plating bath, a film containing 0.08% by weight of Co can be obtained by adding 200 ppm of Co to a plating bath, a film containing 0.13% by weight of Co can be obtained by adding 300 ppm of Co to a plating bath, and a film containing 0.40% by weight of Co can be obtained by adding 1000 ppm of Co to a plating bath.

In the present invention, an excellent magnetic recording medium can also be obtained by subjecting a coating layer containing no Co to the treatment described below and, therefore, the method of producing the same will be described simultaneously.

Although the base surface was cleaned by degreasing, etching, and zincate treatment in case of forming a base provided with the above coating layer, the base surface may be cleaned by a known general method of cleaning the base surface, as a matter of course. Furthermore, the above plating bath was used in the case of forming an NiCoP plating, but it is a matter of course to use a plating bath with a requisite composition in the case of plating with the other composition. In case of forming the coating layer, various film formation methods such as the sputtering method, the vacuum vapor deposition method, and the CVD method may be used, in addition to the plating method, as a matter of course.

The base provided with the coating layer was put in a film forming chamber such as a sputtering device, and then the inside of the film forming chamber was evacuated to adjust the ultimate vacuum degree to a high vacuum in the order of 3 × 10⁻⁹ Torr (399 × 10⁻⁹ Pa) . A high-purity Ar gas, wherein the concentration of impurities such as water was adjusted to 1 ppb or less, was introduced and a high-purity Ar gas was introduced so as to reach several mmTorr, e.g. 2 mmTorr (0.266 Pa), followed by sputter etching (dry-etching) and further cleaning of the surface of the coating layer. The sputtering can be conducted at power output of several hundred watts, e.g. 200 W, for a time within a range from about several seconds to several tens of seconds.

The sputter etching is different from a sputtering which is conducted by using a conventional general sputtering device equipped with a film forming chamber at the ultimate vacuum degree in the order within a range from 1 × 10⁻⁶ to 1 × 10⁻⁷ Torr (133 × 10⁻⁹ to 133 × 10⁻⁷ Pa), into which a non-purified Ar gas is introduced. By using a conventional sputtering device at the ultimate vacuum degree within a range from about 1 × 10⁻⁶ to 1 × 10⁻⁷ Torr), into which a normal Ar gas for forming a film (concentration of impurities such as water is about 1 ppm) is introduced, the etched surface is immediately contaminated .with impurities in a sputter etching atmosphere even if the surface of the film is cleaned by sputter etching.

In Applied Physics, Vol. 65, No. 12, pages 1218-1228 (published on December, 1996), the present inventors have reported that characteristics of the magnetic layer formed on the etched film degraded due to the occurrence of this contamination. In contrast, it is possible to obtain a sufficiently clean etched surface to prevent degradation of the characteristics of the magnetic layer to be formed later by adjusting the ultimate vacuum degree to high vacuum in the order of 3 × 10⁻⁹ Torr (399 × 10⁻⁹ Pa) or less under the conditions described above, introducing a high-purity Ar gas, wherein the concentration of impurities was adjusted to 1 ppb or less so as to reach 2 mTorr, into a film forming chamber, and cleaning the surface of the coating layer by dry-etching.

Then, an oxygen gas is introduced into the film forming chamber so as to reach the pressure within a range from about 1 × 10⁻⁶ to 1 × 10⁻⁷ Torr, and then the surface of the coating layer is exposed to oxygen. The quantity of oxygen exposure is adjusted within a range from about 0 L to 30 L (Langmuir).

As used herein, the term "1 L" means exposure at 1 × 10⁻⁷ Torr for one second, "3.5 L" means exposure at 1 × 10⁻⁶ Torr for 3.5 seconds or exposure at 1 × 10⁻⁷ Torr for 35 seconds, and "30 L" means exposure at 1 × 10⁻⁶ Torr for 30 seconds or exposure at 1 × 10⁻⁷ Torr for 300 seconds.

A large amount of oxygen can be physically adsorbed on the surface of the coating layer by performing the oxygen exposure described above. When the quantity of oxygen exposure is too large, oxygen is likely to adhere to the entire surface of the coating layer, thereby forming an oxide or an oxide layer. The oxygen exposure performed by introducing oxygen at a predetermined pressure in the above-described high vacuum atmosphere after etching can make it possible for oxygen to intermittently adhere to the surface of the coating layer in a physically adsorbed state. When the coating layer contains Co, oxygen is liable to be adsorbed at the section where Co atoms are present because Co has a high affinity to bond with oxygen. Therefore, the coating layer preferably contains Co. An element having high affinity with oxygen, like Co, can also be used as an additive element in place of Co. In the case of forming Ni-P, which is a Ni-based alloy used as the coating layer by the plating method, this additive element is preferably an element capable of co-precipitating with Ni. There can be selected, as the element capable of satisfying these conditions, one or more elements selected from Fe, W, V, Cr, Mn, Cu, Zn, Mo, Pd, Sn, Re, Al, Zr, B, and Ti.

The surface of the coating layer can be obtained in the state where neither an oxide nor an oxide layer, but a large amount of oxygen is physically adsorbed on the surface of the coating layer by introducing the above quantity of exposure of oxygen on the purified surface of the coating layer. Oxygen in such a physically adsorbed state can be utilized as a suppression point for coarsening of grains, which is described below.

### (Sputtering method of underlayer and magnetic layer)

The sputtering methods serving as examples of the methods of producing an underlayer and a magnetic layer of a ferromagnetic metal of the present invention include, for example, a carrier type sputtering method wherein a thin film is formed while a base moves in front of a target, and a static type sputtering method wherein a thin film is formed in the state where a base is fixed in front of a target.

The carrier type sputtering method is advantageous for producing a low-cost magnetic recording medium because of its good mass-productivity, while the static type sputtering method makes it possible to produce a magnetic recording medium having excellent read/write performance because the incident angle of sputtered particles to the base is more stable.

In the case of producing the magnetic recording medium 60 of the present invention, the method is not limited to any of the carrier type and static type methods.

### (Ultimate vacuum degree of the film forming chamber for forming the metallic underlayer and the magnetic layer of ferromagnetic metal)

Heretofore, "the ultimate vacuum degree, at which a metallic underlayer and/or a ferromagnetic metal magnetic layer are formed, has been considered to be a film forming factor which has an influence on the value of the coercive force depending on the material of ferromagnetic metal magnetic layer.

The ultimate vacuum degree (e.g. the order within a range from 10⁻⁶ to 10⁻⁷ Torr) is believed to have a large influence, in particular in the case of a Co-based magnetic material containing Ta, in a ferromagnetic metal magnetic layer. Therefore, in the present invention, the underlayer and magnetic layer are formed by the ultra clean process of forming a film in the high vacuum of the ultimate vacuum degree in the order of about 3 × 10⁻⁹ Torr.

In the case that the ferromagnetic metal magnetic layer is formed from a ternary CoCrGe alloy with the above composition, a magnetic recording medium, which simultaneously has a high normalized coercive force and thermal stability, can be produced even if a magnetic layer is formed in a film forming chamber wherein the ultimate vacuum degree is in the order within a range from 10⁻⁶ to 10⁻⁷ Torr. Therefore, a film may be formed at a conventional ultimate vacuum degree. As a matter of course, the magnetic layer of the above ternary CoCrGe alloy may be formed by the ultra clean process provided by the present inventors.

### (Surface temperature of the substrate in the case that the metallic underlayer and/or the ferromagnetic metal magnetic layer are formed)

As used herein, the term "surface temperature of a substrate in the case that a metallic underlayer and/or a ferromagnetic metal magnetic layer are formed" is a film forming factor which has an influence on the value of the coercive force without depending on the material of ferromagnetic metal magnetic layer.

As far as the substrate is not damaged, a higher coercive force can be realized by forming a film at a higher surface temperature. The damage of the substrate means external changes such as warping, swelling, and cracking, and internal changes such as generation of magnetization and increase of . the quantity of a gas evolved. However, any heat treatment must be generally conducted in a film forming chamber or a preliminary chamber thereof so as to realize the high surface temperature of the substrate. This heat treatment has disadvantages such as gases and dusts generated in the space in the vicinity of the substrate being incorporated into the thin film during the formation of the film, thereby making various film properties unstable.

High surface temperature of the substrate also has the following problems:
(1) A non-magnetic NiP layer in a NiP/Al substrate causes magnetization.
(2) Strain is produced in a substrate.
(3) It is difficult to raise or maintain the substrate temperature for a substrate having a low thermal conductivity, such as a substrate made of glass. Accordingly, there is required a method capable of obtaining the desired various film properties even if the above heat treatment is not conducted or a heat treatment at low temperatures is conducted.

### (Surface roughness of substrate, Ra)

The surface roughness of the substrate in the present invention includes, for example, the arithmetical mean deviation of profile (Ra) determined in case the surface of a disk-shaped substrate is measured.

As a measuring device for surface roughness Ra, for example, TALYSTEP manufactured by RANKTAYLORHOSBSON Co. can be employed.

In the case that the substrate starts to rotate in a stopped state or turns into a stopped state from a rotating state, the surface of the magnetic recording medium and the surface of the magnetic head contact and slide on each other (CSS operation). At this time, because the surface roughness Ra is larger, it becomes better able to suppress stiction of the magnetic head and increase of the friction coefficient. On the other hand, in the case that the substrate has reached a maximum rotating speed, the distance between the magnetic recording medium and magnetic head, i.e. the flying height of the magnetic head, must be reduced to as small a value as possible. Therefore, the smaller the value of Ra, the better. Accordingly, a maximum value and a minimum value of the surface roughness of the substrate are appropriately decided according to the reasons described above and the specifications required for the magnetic recording medium.

For example, in the case that the flying height of the magnetic head is 24 *µ* inches, Ra is within a range from 6 to 8 nm. However, the flying height (distance between the magnetic head and the surface of the magnetic head recording medium in the case of a read/write operation) of the magnetic head must be reduced more so as to further increase the recording density. It is important to make the surface of the magnetic recording medium smoother so as to meet this requirement. For such a reason, the substrate having a small surface roughness Ra is preferable. Accordingly, even in the case that the substrate has a smaller surface roughness, a method capable of obtaining the various desired film properties may be appropriately employed. For example, Ra is reduced to 1.5 nm or less after forming a texture on a structure comprising an Al base and an Ni-P layer formed on the Al base, and Ra of the Ni-P/Al substrate subjected to a special polishing treatment can also be adjusted within a range from 0.5 to 0.7 nm.

### (Texturing treatment)

The texturing treatment of the substrate in the present invention is conducted by, for example, using a mechanical polishing method, a chemical etching method, and a method of physically forming an uneven film. In the case of an aluminum alloy substrate, which is most widely used as the substrate of a magnetic recording medium, the method of mechanical polishing is employed.

For example, there is a method of concentrically forming slight scratches on a (Ni-P) film formed on the surface of an aluminum alloy base by pressing a tape, wherein abrasive particles adhered to the surface, against the surface of the rotating substrate. In this method, abrasive particles are sometimes used in the state of being separated from the tape.

For the reasons described in the "Surface roughness of substrate", a method capable of obtaining various desired film properties may be appropriately employed even in the case that the above texturing treatment is not conducted or finer texture is formed.

The magnetic recording medium obtained by the above method can improve the crystallographic orientation of the magnetic layer 65 by the crystallographic orientation of the underlayer 64 because a Cr layer constituting the underlayer 64 is (200), oriented, and the magnetic layer 65 is formed thereon by epitaxial growth while being (110) oriented. Furthermore, since coarsening of grains of the underlayer 64 is suppressed by oxygen adsorbed on the surface of the coating layer 63, coarsening of grains of the magnetic layer 65 formed therein can also be suppressed. As a result, a magnetic layer 65 that has fine grains can be obtained.

In the case of the oxygen exposure, when a proper amount of oxygen is supplied to the surface of the coating layer by introducing the oxygen in a vacuum atmosphere at the vacuum degree of 1 X 10⁻⁶ Torr or less, thereby a state is attained wherein a large amount of oxygen is intermittently adsorbed on the surface of the coating layer, and this physically adsorbed oxygen can serve as a suppression point, i.e. a pinning point for the coarsening of grains of the underlayer, thereby suppressing the coarsening of grains of the underlayer, and thus making it possible to provide a magnetic recording medium which has a refined grain structure and low noise.

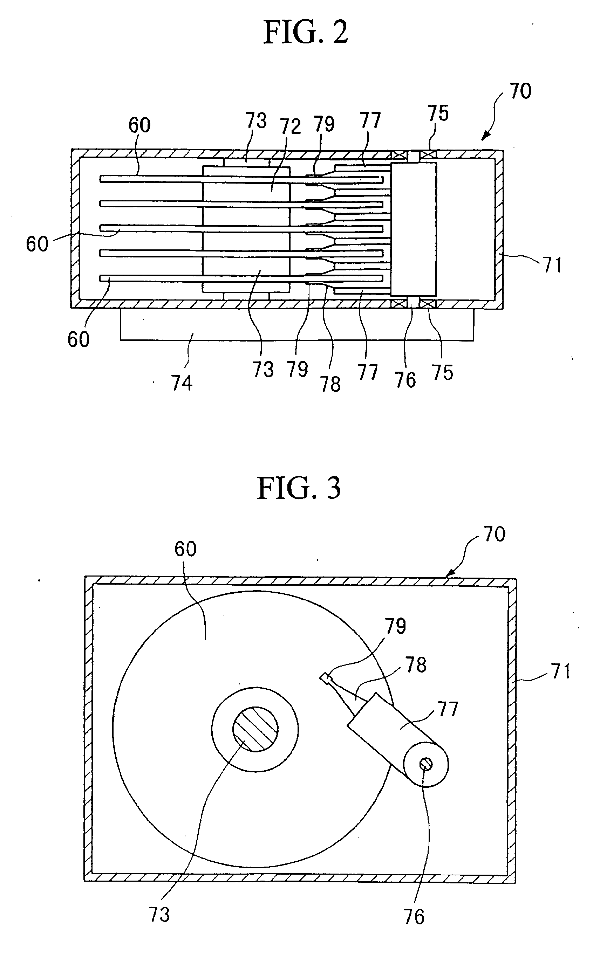

FIG. 2 and FIG. 3 show an example of an HDD (hard disk drive) device (magnetic recording device) incorporating the above-described magnetic recording media 60 therein.

In a magnetic recording device 70 of this example, plural (five in the example shown in FIG. 2) magnetic recording media 60 are alternately disposed in a container type casing 71 in the state of being inserted into a spindle 73 with a spacer 72. A bearing of the spindle 73 also disposed in the casing 70 and a motor 74 for rotating the spindle is disposed outside the casing 71, thereby enabling the respective recording media 60 to freely rotate about the spindle 73.

A rotation axis 76 supported parallel to the spindle 73 by a bearing 75 is disposed at the side of the magnetic recording media 60 in the casing 71. Plural arms 77 are attached to the rotation axis 76 to extend at the magnetic recording media side, and a magnetic head 79 is attached to a tip side of each swing arm 77 via a triangular plate-shaped load arm 78.

The magnetic head 79 is composed of a thin film type magnetic head, or a MIG type magnetic head, or a dual type magnetic head element obtained by integrating an MIG type magnetic head element with a read-only magnetoresistive type magnetic element, and a slider, and this slider is elastically supported by a gimbal member disposed at the tip side of the load arm 78. The magnetic head 79 moves to an arbitrary position on the magnetic recording medium 60 with the movement of the swing arm 77.

In the magnetic recording device 70 with the above construction, the desired magnetic information can be written on the magnetic recording medium 60 by rotating the magnetic recording medium 60, moving the swing arm 77 and moving the magnetic head 79 to an arbitrary position on the magnetic recording medium 60, thereby to apply magnetization generated by the magnetic head 79 to the ferromagnetic metal magnetic layer (magnetic recording layer) 65 formed on the magnetic recording medium 60. In addition, the magnetic information can be read by moving the swing arm 77 and moving the magnetic head 79 to an arbitrary position on the magnetic recording medium 60, thereby to detect leakage of the magnetic field from the ferromagnetic metal magnetic layer (magnetic recording layer) 65 of the magnetic recording medium 60.

If the ferromagnetic metal magnetic layer (magnetic recording layer) 65 has the excellent magnetocrystalline anisotropy as described above in the case of the reading and writing of the magnetic information, thermal agitation of the ferromagnetic metal magnetic layer 65 can be suppressed. Therefore, magnetic characteristics of the ferromagnetic metal magnetic layer 65 do not degrade even if the inside of the magnetic recording device 70 is exposed to the heat of a motor 74, for example, and the magnetic recording device is used while being heated to a high temperature which exceeds 100°C. That is, there can be provided a magnetic recording device 70 having excellent read/write characteristics, which does not cause degradation of read/write performance of the ferromagnetic metal magnetic layer 65 even if the magnetic recording device is used for a long period and heated for a long time.

When using a ferromagnetic metal magnetic layer 65 having a high coercive force, any leakage of the magnetic field applied to the reading element of the magnetic head during the running while the magnetic head is levitated magnetically can be enhanced. Therefore, a strong signal can be received, thereby making it possible to obtain read/write performance having high S/N ratio.

The magnetic recording device 70 described above with reference to FIG. 2 and FIG. 3 shows an example of the magnetic recording device and, therefore, the number of magnetic recording media disposed in the magnetic recording device may be any arbitrary number of 1 or more and an arbitrary number of one or more of magnetic heads 79 may be disposed. The configuration and driving system of the swing arm 77 are not limited to those shown in the drawings and, as a matter of course, a linear driving system and other systems may also be used.

### Embodiments

The following embodiments further illustrate the present invention in detail, but the present invention is not limited by these embodiments.

### "Test procedure"

An aluminum base 3.5 inches in diameter was degreased, etched, and treated with zincate, and then plated with NiCoP using a plating solution prepared by adding cobalt sulfate to a commercially available plating solution (manufactured by Meltex Co. under the trade name of Ni-422 (9A)) to form a coating layer of 12 *µ*m in thickness. In this case, the concentration of Co in the coating layer was adjusted within a range from 0.003 to 0.10% by weight by adjusting the concentration of Co in the plating solution. Using a Co-free plating solution, an aluminum base was plated with Ni-P to obtain a base with a Ni-P coating layer.

After these, bases with a coating layer were heated to 250°C, thereby releasing any gas in the film, the surface thereof was polished to adjust the surface roughness Ra: 5 Å, thus obtaining an ultra-smooth Ni-P-Co/Al base and an ultra-smooth Ni-P/Al base, which are used for the magnetic recording medium.

Furthermore, the magnetic recording media used in the test were produced by using a sputtering device (ILC3013 manufactured by Anelva, Ltd., ultimate vacuum degree: 3 X 10⁻⁹ Torr or less) wherein the inner wall surface in a film forming chamber is subjected to a composite electro-polishing treatment. As the process gas during the film formation, an ultra-high purity Ar gas (ultra clean Ar gas having a H₂O concentration of 1 ppb or less) was used.

In the following test, four kinds of plural bases, for example, a normal base obtained by plating with a Ni-P film and annealed at 150°C for one hour, and special bases for oxygen exposure, obtained by plating with Ni-P-Co containing 30 ppm, 100 ppm and 300 ppm of Co having strong affinity with oxygen using the above method and annealed at 250°C for one hour, were used.

Immediately before film formation, a film forming chamber containing a base having an Ni-P film or an Ni-P-Co film therein was evacuated to the ultimate vacuum degree of 3 × 10⁻⁹ Torr and, after the film surface was dry-etched by introducing an ultra clean Ar gas (sputter etching under the conditions of 2 mTorr/200 W/5 second), the film surface was exposed to oxygen in a vacuum atmosphere of 1 X 10⁻⁷ Torr for 0 to 250 seconds and, furthermore, a Cr underlayer (5 nm in thickness) and a CoNi_{12.5}Cr₁₅Ta_{3.5}Pt₅ magnetic layer (15 nm, 20 nm, and 30 nm in thickness) were formed in this order at an applied bias of 0 V.

Furthermore, a carbon protective layer (10 nm in thickness) was formed on the magnetic layer. The magnetic layer used in this test is a magnetic layer with a composition which exhibits a coercive force of 3.3 kOe under the conditions of a ratio (of the thickness of the underlayer to that of the magnetic layer) of 20/20 nm and an applied bias of -100 V.

With respect to the magnetic recording media thus obtained, the magnetic characteristics were evaluated by a vibrating sample magnetometer (VSM) and a SQU1D magnetometer, the microstructure was examined by a X-ray diffraction meter (XRD) and a transmission electron microscopy (TEM), and the read/write performance were evaluated by an inductive MR (magnetoresistive effect type) composite type head.

### "Dependence of quantity of oxygen absorption and microstructure"

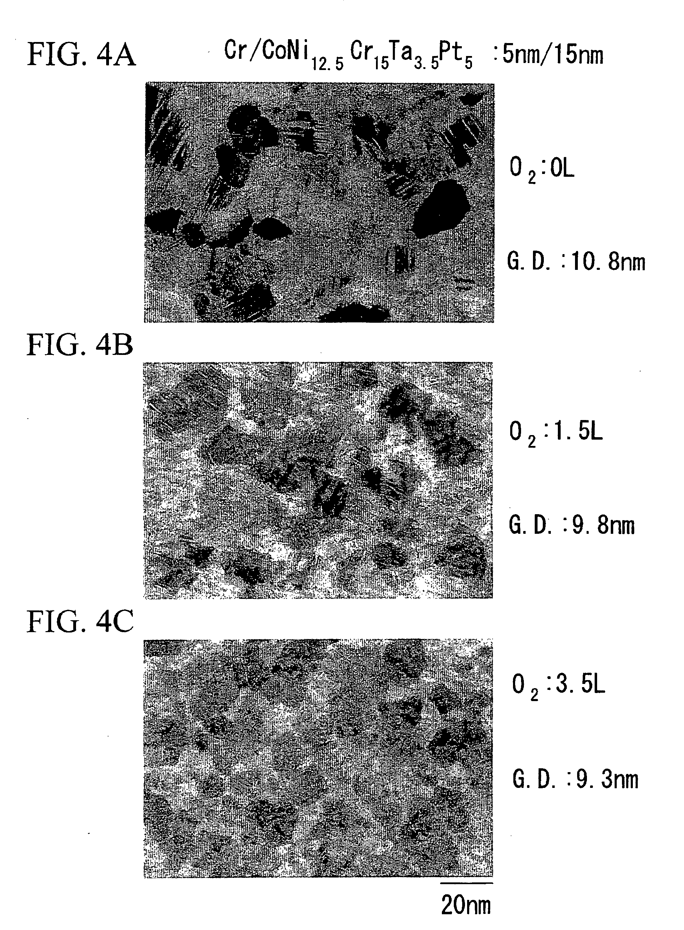

TEM images of a magnetic recording medium having a structure wherein the base surface is not exposed to oxygen, which was produced by using an ultra clean process (UC-Process: process of evacuating to the ultimate vacuum degree of 3 X 10⁻⁹ Torr or less, introducing an ultra clean Ar gas, performing a dry-etching, thereby cleaning the surface of the coating layer, and forming a film) and a base with a Co-free coating layer, and magnetic layers obtained by dry-etching immediately before forming the underlayer and exposure oxygen at the quantity of 1.5 L and 3.5 L (Langmuir), as well as a mean ferromagnetic grain size (G.D.) calculated from the TEM images are shown in FIG. 4A to 4C.

As used herein, the term "L: Langmuir" is an indication of the quantity of oxygen exposure and 0 L corresponds to no oxygen exposure, 1 L corresponds exposure at 1 X 10⁻⁷ Torr for 10 seconds, 3.5 L corresponds exposure at 1 X 10⁻⁷ Torr for 35 seconds, 10 L corresponds exposure at 1 X 10⁻⁷ Torr for 100 seconds, and 25 L corresponds exposure at 1 X 10⁻⁷ Torr for 250 seconds. With respect to 1 L, the conditions of the exposure at 1 X 10⁻⁶ Torr for 1 second is the same as those of the exposure at 1 X 10⁻⁷ Torr for 10 seconds . However, the conditions of the exposure at 1 X 10⁻⁷ Torr for 10 to 250 seconds were employed as 1 L to 25 L in this embodiment because there is a concern that the oxygen is not completely adsorbed by the exposure for too short an exposure time, such as one second.

As is apparent from the results shown in FIG. 4A to 4C, the mean ferromagnetic grain size G.D. reduces to 9.9 nm and 9.3 nm from 10.8 nm with the increase of the quantity of the oxygen exposure onto the base surface. It is believed that the reduction of the ferromagnetic grain size due to the increase in the quantity of oxygen exposure is caused by promotion of the effect of suppressing the growth of Cr grains of the underlayer (pinning effect) due to the increase of the quantity of the oxygen exposure onto the base surface.

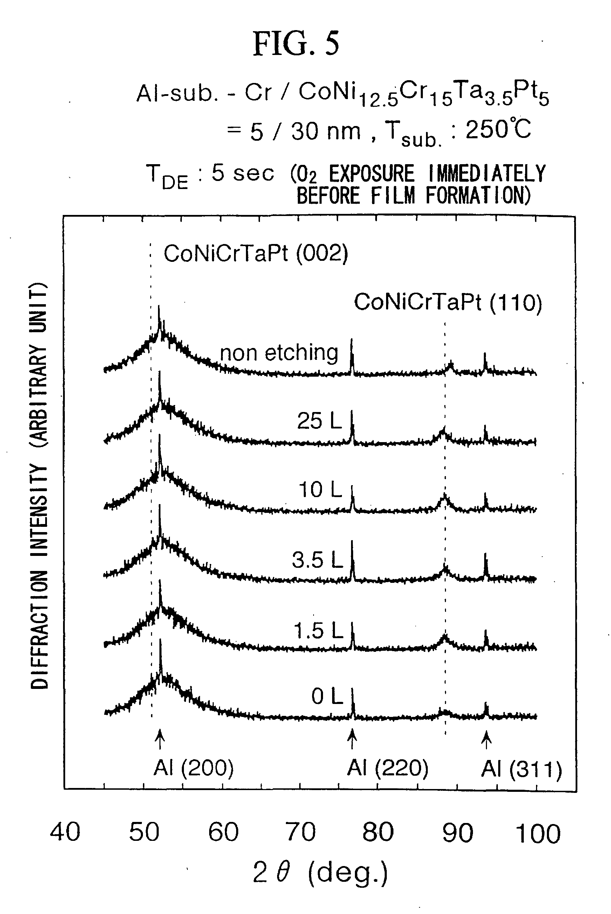

FIG. 5 shows X-ray diffraction patterns of each magnetic layer when the coating layer was dry-etched immediately before film formation and then was exposed to oxygen. The quantity of the adsorption was varied within a range from 0 L to 25 L. The thickness of the Cr underlayer was fixed at 5 nm, while the thickness of the CoNiCrTaPt magnetic layer was fixed at 30 nm.

As is apparent from the results shown in FIG. 5, a strong diffract-ion peak from the Co(100) plane, which indicates a longitudinal orientation, was observed in the magnetic layer of any magnetic recording media regardless of the quantity of oxygen exposure (quantity of oxygen adsorption) and no other diffraction peak was observed. This fact shows that the exposure of the base surface to oxygen does not exert an influence on the intensity of crystallographic orientation of the magnetic layer.

As is apparent from the. above description, the ferromagnetic grain size of the magnetic layer can be reduced by exposing the surface of the coating layer to oxygen after the coating layer was dry-etched under the above vacuum conditions immediately before film formation without changing the crystallographic orientation of the magnetic layer. Reducing the grain size of the magnetic layer from 10.8 nm (no oxygen exposure) to 9.3 nm (quantity of oxygen exposure: 3.5 L) is a very significant result because we succeeded in grain refinement by about 14%.

### "Dependence of quantity of oxygen adsorption and determination of magnetic characteristics"

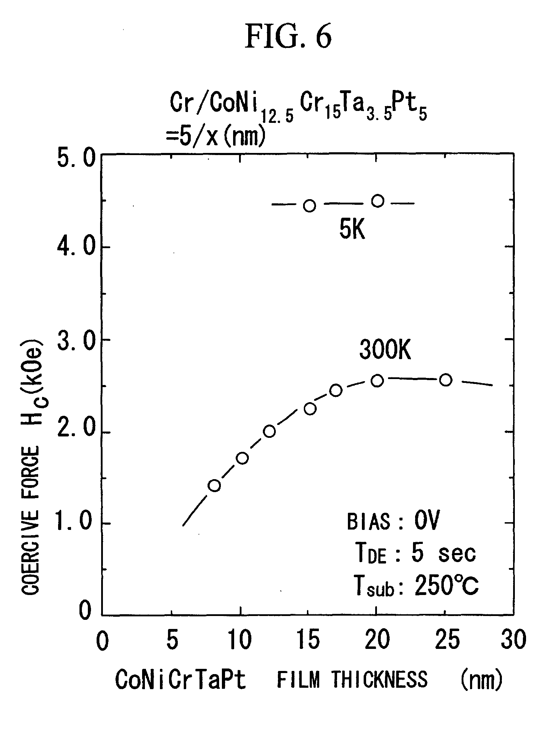

The dependence of the coercive force on the magnetic layer thickness at 300 K and 5 K in a magnetic recording medium comprising an underlayer and a magnetic layer, which has a laminated structure (laminated structure of Cr/CoNi_{12.5}Cr₁₅Ta_{3.5}Pt₅), produced by using the UC-Process, is shown in FIG. 6. The thickness of the Cr underlayer was fixed at 5 nm.

It is shown in FIG. 6 that the coercive force at 5K of the mediums with the magnetic layer thickness at 15 nm and that at 20 nm are almost the same, while the coercive force of the magnetic recording medium at 15 nm is smaller than that of the medium at 20 nm at 300 K. Therefore, it is believed that the reduction of the coercive force in the magnetic recording medium with a magnetic layer of 15 nm in thickness or a magnetic layer having a smaller thickness is caused by thermal agitation.

In the case that the oxygen is adsorbed on the base surface, the magnetic characteristics were evaluated by using a sample wherein the thickness of the magnetic layer was fixed to 30 nm, which is considered to cause hardly any reduction in the coercive force due to thermal agitation, samples wherein the thickness of the magnetic layer were fixed at 20 nm and 15 nm, which are considered to suffer reduction of the coercive force due to the influence of thermal agitation as a result of the change of the microstructure (refinement of ferromagnetic grains).

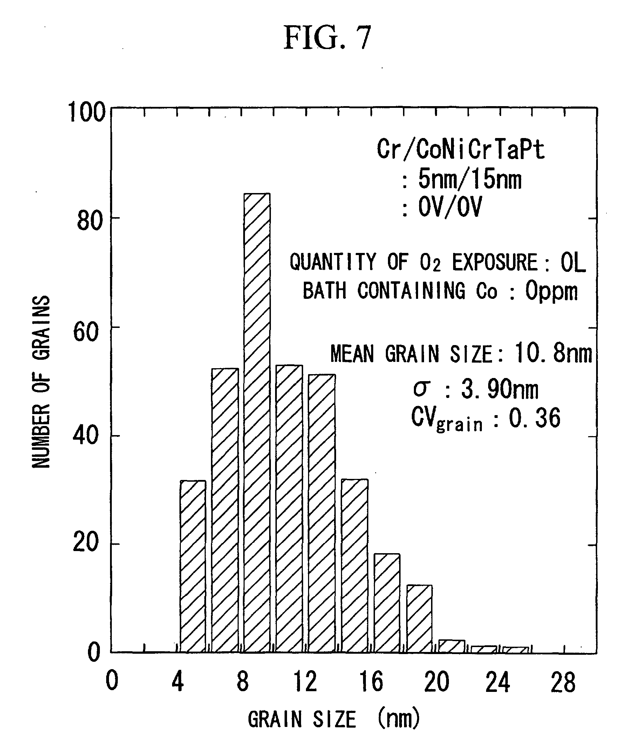

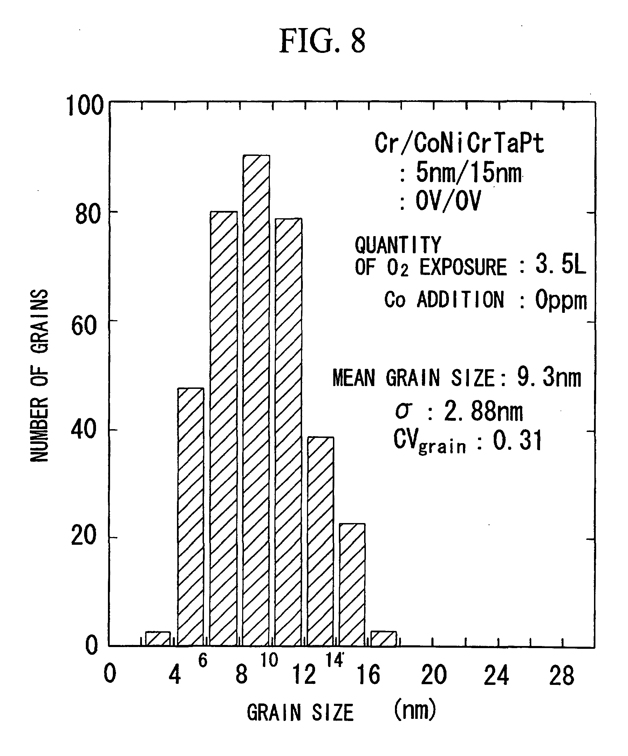

The population distribution of the ferromagnetic grain size of a magnetic layer in a laminated structure of Cr/CoNi_{12.5}Cr₁₅Ta_{3.5}Pt₅ made at the quantity of oxygen exposure of 0 L using UC-Process is shown in Fig. 7, while the population distribution of the ferromagnetic grain size of a magnetic layer with the same laminated structure made at the quantity of oxygen exposure of 3.5 L under the same conditions using the UC-Process is shown in FIG. 8.

As is apparent from a comparison between FIG. 7 and FIG. 8, the mean grain size was reduced and almost all of grains having a grain size of larger than 16-17 nm (in other words, coarse ferromagnetic grains having a grain size which is two or more times larger than the mean grain size disappeared in the sample wherein the coating layer was exposed to oxygen. In contrast, in the sample wherein oxygen exposure was not conducted, several tens of grains having a grain size of larger than 16 nm and grains having a grain size of larger than 18 nm are present, and several grains having a grain size of larger 20, 22 and 24 nm (in other words, coarse ferromagnetic grains having a grain size which is two or more times larger than the mean grain size) are present, respectively.

The fact, that the number of the coarse grains can be reduced by the oxygen exposure, means that the noise of the magnetic layer could be reduced.

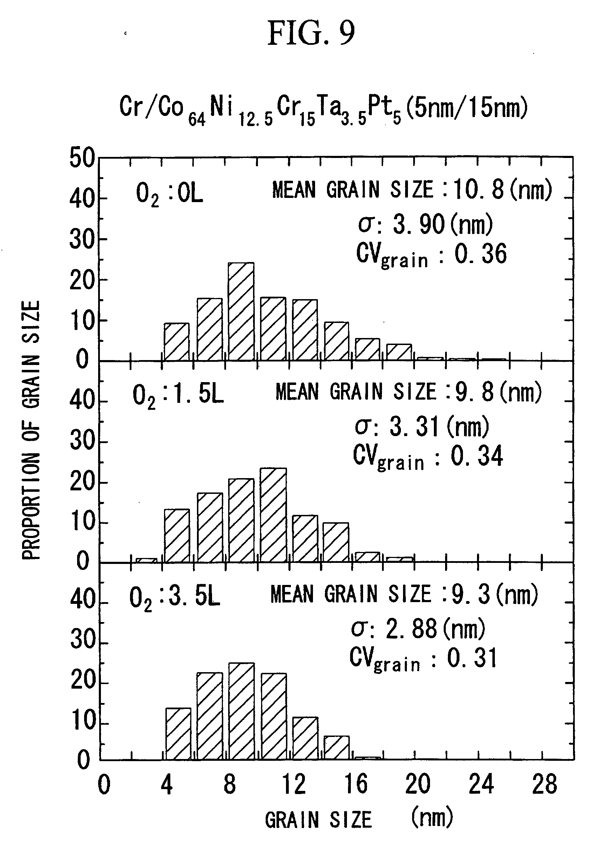

The distribution state of the grains in the samples, wherein the quantity of oxygen exposure is respectively adjusted to 0 L, 1.5 L and 3.5 L, is shown in FIG. 9. As is apparent from FIG. 9, the number of the coarse grains is drastically reduced with the increase of the quantity of oxygen exposure.

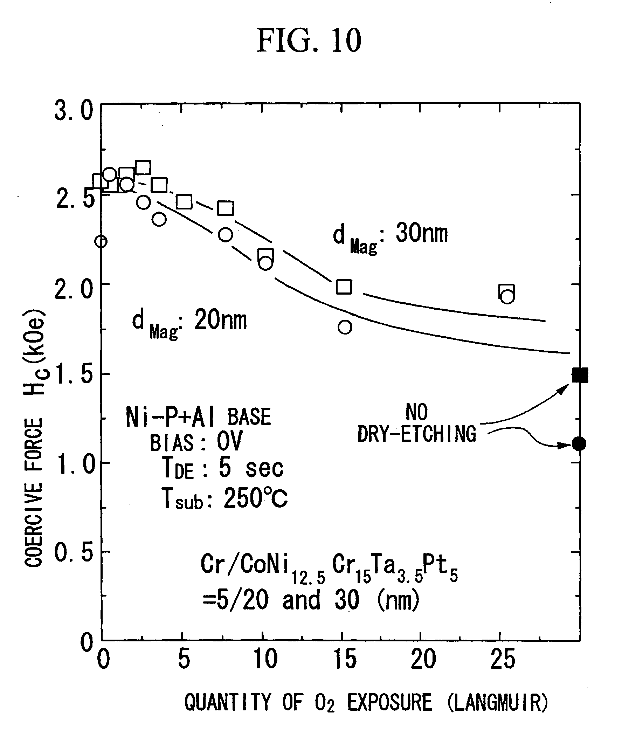

The dependence of the coercive force on the quantity of oxygen adsorption in a magnetic recording medium with a laminated structure of Cr/CoNi_{12.5}Cr₁₅Ta_{3.5}Pt₅ obtained by exposing the base surface to oxygen immediately after conducting dry-etching (sputter etching) of the coating layer on the base and immediately before forming an underlayer of Cr is shown in FIG. 10.

The coercive force of the magnetic recording medium which was not subjected to dry-etching (inverse-sputtering) is also shown in FIG. 10. The quantity of oxygen exposure was adjusted within a range from 0 L to 25 L, the thickness of the underlayer of Cr was adjusted to 5 nm, and the thickness of the magnetic layer was adjusted to 20 nm and 30 nm, respectively.

Also in magnetic recording media having any film thickness shown in Fig. 10, the coercive force tends to be reduced when the quantity of the oxygen exposure onto the base surface increases. It has been found that a sample subjected to dry-etching exhibits a higher coercive force than a sample which is not subjected to dry-etching even in the case of any quantity of oxygen exposure. Accordingly, it has been found that a magnetic layer having a larger coercive force than that of the same which is not subjected to dry-etching even in the case of any quantity of oxygen exposure within a range from 0 L to 25 L when subjected to dry-etching in view of the coercive force. However, according to the test using a magnetic layer with the other composition described below, good characteristics can be obtained even in the case of the quantity of an exposure of 30 L and, therefore, the quantity of oxygen exposure may be 30 L or less.

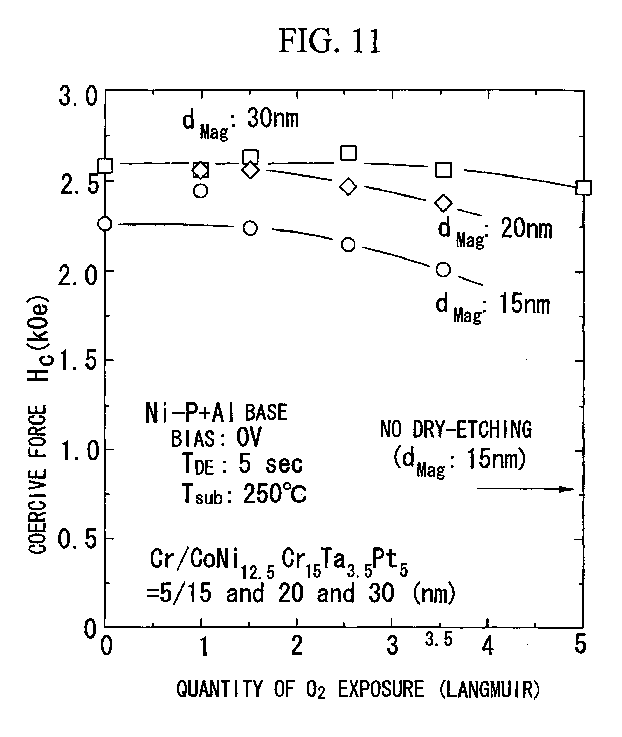

The dependence of the coercive force on the quantity of oxygen adsorption shown in FIG. 10 is shown in an enlarged state at the quantity of exposure within a range from 0 L to 5 L in FIG. 11, together with each coercive force of the magnetic recording media in the cases that the thickness of a magnetic layer is 15 nm, 20 nm and 30 nm.

In the magnetic recording medium sample wherein the thickness of the magnetic layer is 30 nm shown in FIG. 11, there is the tendency that the coercive force starts to slightly decrease at the quantity of oxygen exposure of about 3.5 L. In the magnetic recording media wherein the thickness of the magnetic layer is 20 nm and 15 nm and the quantity of oxygen exposure is 1.0 L, however, there was the tendency that the coercive force starts to gradually decrease with the increase of the quantity of oxygen exposure at the quantity of oxygen exposure of about 1.5 L. In these magnetic recording media, it can be considered that the intensity of the crystallographic orientation of the magnetic layer is not degraded as shown in FIG. 5 and, therefore, the decrease of the coercive force is caused by the increase of the inter-granular interactions of the ferromagnetic grains, or the .influence of thermal agitation due to the refinement of the ferromagnetic grains.

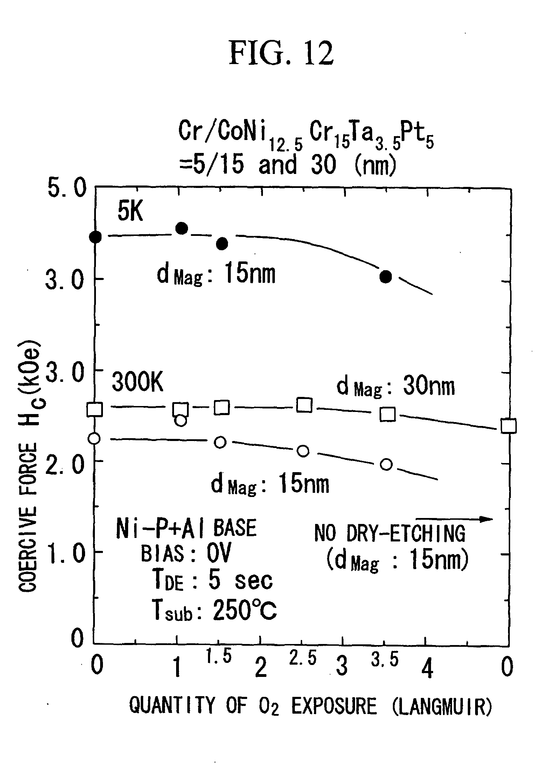

The dependence of the coercive force on the quantity of oxygen exposure (quantity of oxygen adsorption) at 5 K and 300 K in magnetic recording media wherein the thickness of a magnetic layer is 15 nm and 30 nm is shown in FIG. 12. In the medium wherein the quantity of oxygen exposure is 3.5 L and the magnetic layer thickness is 30 nm, the coercive force at 5 K, which is considered to be free from thermal agitation, tends to decrease as compared to the coercive force of the magnetic recording medium wherein the quantity of exposure is 2.5 L. Therefore, the increase of interactions between ferromagnetic grains due to penetration of oxygen into the film is considered in the magnetic recording medium wherein the quantity of oxygen exposure is 3.5 or more.

It is believed from these results that the decrease of the coercive force at the quantity of oxygen exposure within a range from about 1.5 L to 3.5 L of the magnetic recording media with the magnetic layer thickness of 15 nm and 30 nm is caused by the influence of thermal agitation due to the refinement of the ferromagnetic grains.

As is apparent from the above description, ferromagnetic grains can be refined by oxygen exposure within a range from about 1.5 L to 3.5 L in the oxygen exposure of the base surface without increasing ferromagnetic intergranular interactions.

### "Dependence of quantity of oxygen adsorption and measurement of read/write performance"

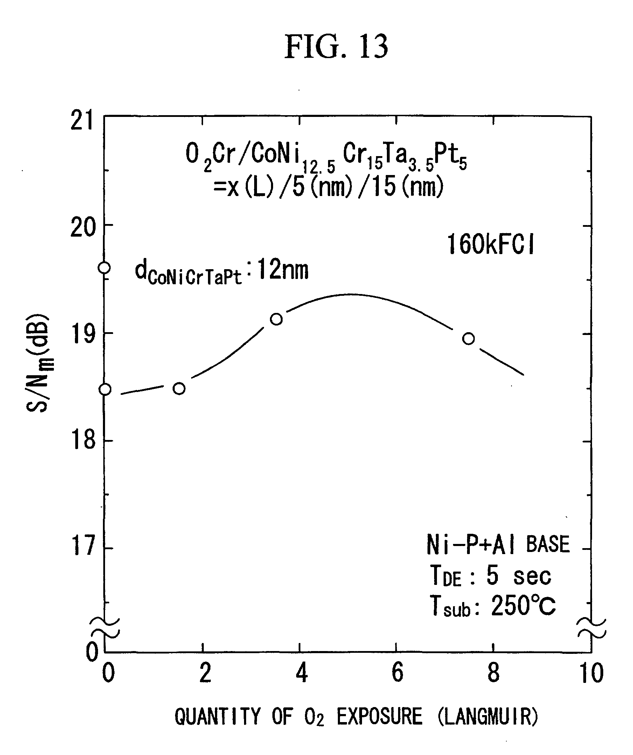

A signal to noise ratio (S/Nₘ=signal/(noise of magnetic recording medium) of a magnetic recording medium comprising an underlayer and a magnetic layer, which has a laminated structure and a composition of Cr/CoNi_{12.5}Cr₁₅Ta_{3.5}Pt₅, to a quantity of oxygen be adsorbed onto the base surface at a linear recording density of 160 kFCI is shown in FIG. 13.

A normal base was used as the base. The thickness of the underlayer of Cr was adjusted to 5 nm and the thickness of the magnetic layer was adjusted to 15 nm. The read/write performance of the magnetic recording medium wherein the thickness of the magnetic layer is 12 nm are also shown in FIG. 13.

As is apparent from the results shown in FIG. 13, the read/write performances are improved and the S/N reaches a maximum value at the quantity of oxygen exposure of about 4 L. It is believed that, although intergranular interactions of ferromagnetic grains tend to increase at the quantity of exposure of about 4 L, the signal to noise ratio can be improved when the grain size of ferromagnetic grains is drastically reduced.

As is apparent from the above description, a magnetic recording medium provided with a magnetic layer capable of increasing the signal to noise ratio by controlling the quantity of oxygen exposure and thickness of the magnetic layer without decreasing the coercive force can be obtained.

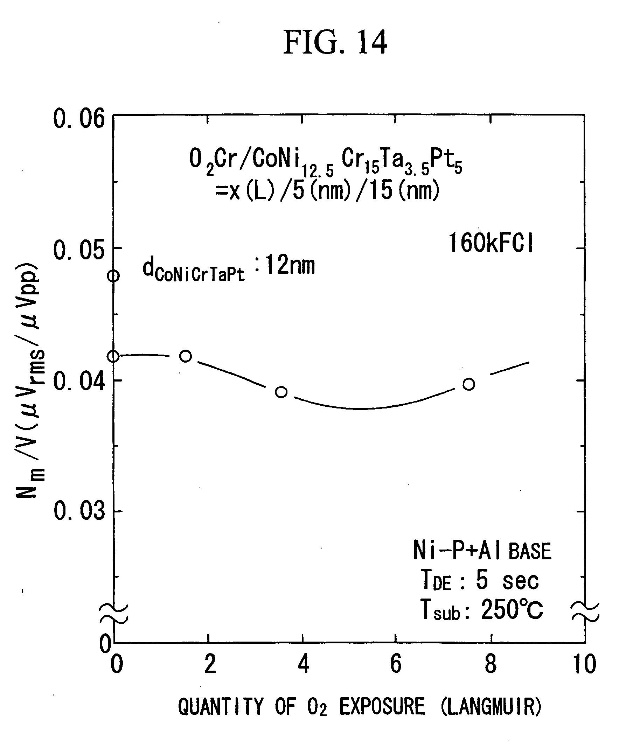

FIG. 14 is a graph showing the normalized media noise Nₘ/V the dependence on the quantity of oxygen exposure at a linear recording density of 160 kFCI of a thin film magnetic recording medium.

It has been found that the normalized media noise does not degrade up to the quantity of oxygen exposure of 8 L in comparison to the sample which is not exposed to oxygen.

### "Quantity of oxygen adsorption and microstructure"

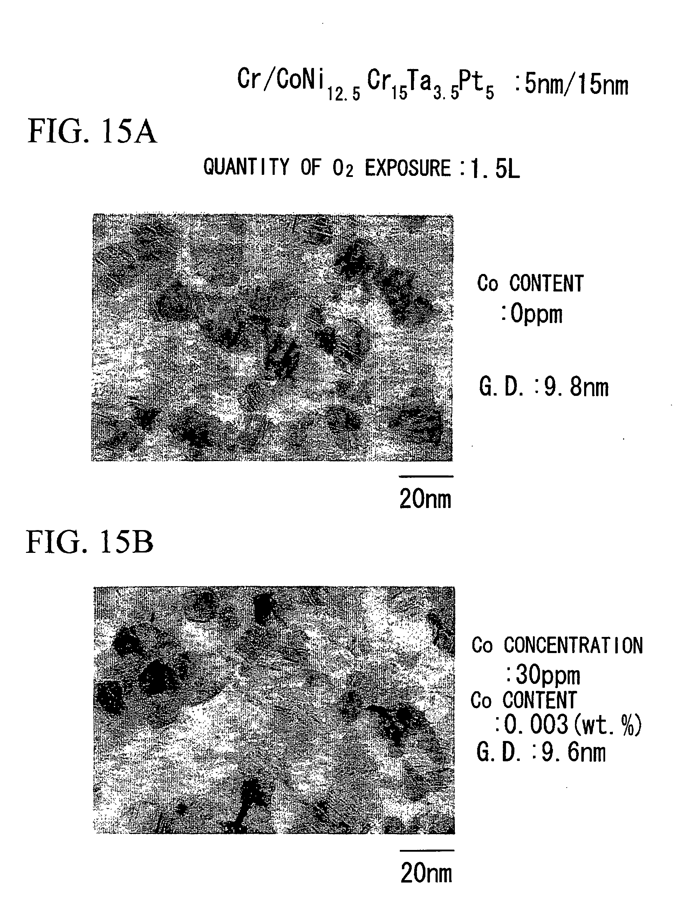

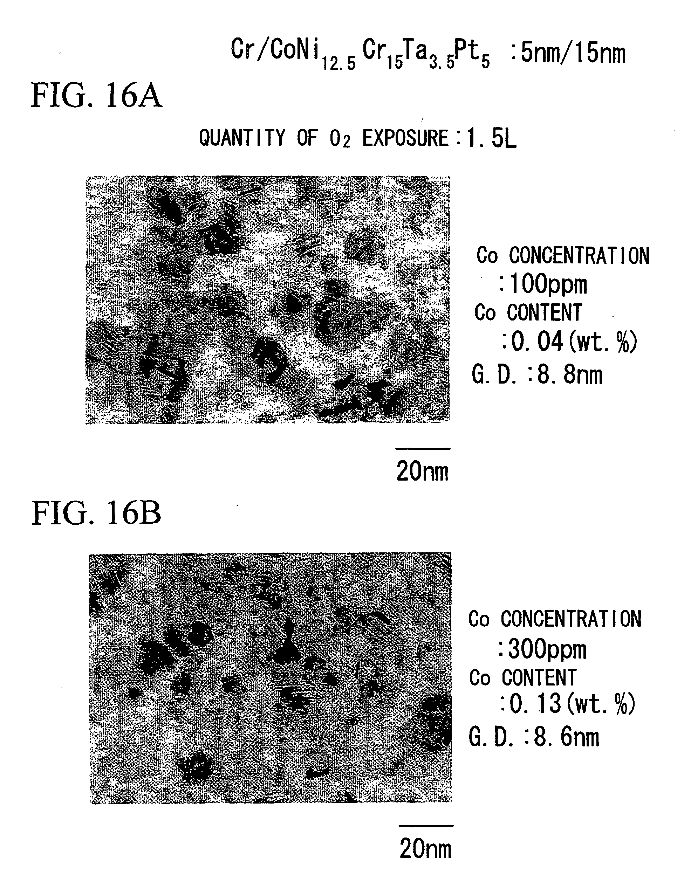

FIG. 15A, 15B and FIG 16A, 16B show the TEM images of four kinds of plural bases. For example, a base which is plated with Ni-P and annealed at 150°C for one hour, obtained by dry-etching immediately before film formation, and the quantity of the oxygen exposure onto the base surface is fixed to 1.5 L. And special bases for oxygen exposure, obtained by plating with Ni-P-Co containing 0.003% by weight, 0.04% by weight and 0.13% by weight of Co having strong affinity with oxygen, and annealing at 250°C for one hour, as well as mean ferromagnetic grain size (G.D.) calculated from the TEM images. The thickness of the Cr underlayer was fixed at 5 nm and the thickness of the CoNiCrTaPt magnetic layer was fixed to 15 nm.

As is apparent from the results shown in FIG. 15A, 15B and FIG. 16A, 16B, the ferromagnetic grain size is reduced from 9.8 nm to 9.6 nm, 8.8 nm, and 8.6 nm with the increase of Co concentration. It is believed that the reduction of the ferromagnetic grain size due to the increase of the quantity of oxygen exposure is caused by promotion of the effect of suppressing the growth of Cr grains of the underlayer (pinning effect) due to the increase of the quantity of oxygen adsorbed onto the base surface.

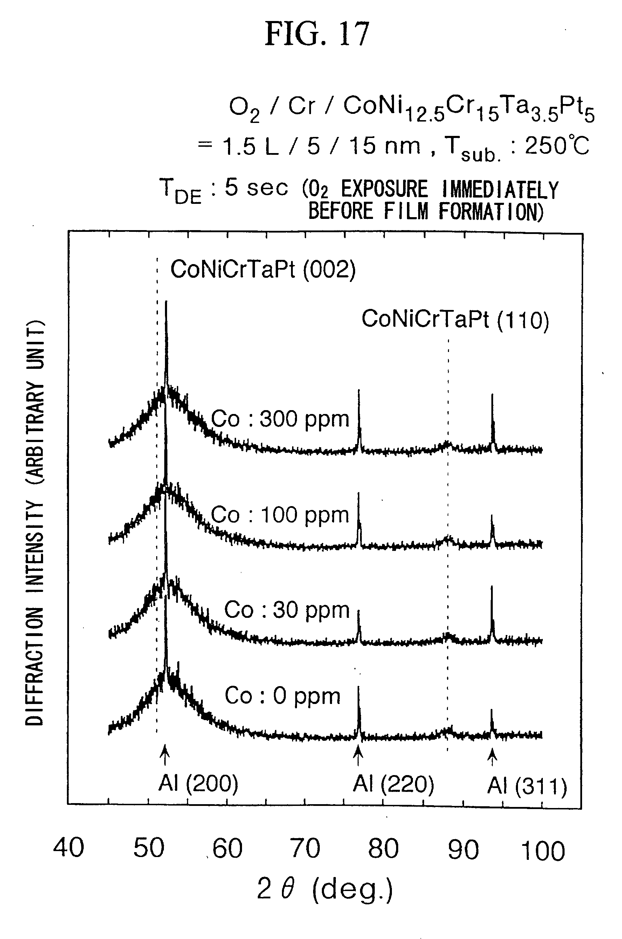

FIG. 17 shows an X-ray diffraction pattern when the quantity of the oxygen exposure onto the base surface is adjusted to 1.5 L and the kind of the base was changed. The thickness of the Cr underlayer was fixed to 5 nm, while the thickness of the CoNiCrTaPt magnetic layer was fixed to 15 nm.

A diffraction peak from the (110) plane, which indicates a longitudinal orientation, was observed in all magnetic recording media regardless of the kind of the base (quantity of Co to be added in the Ni-P film) and no other diffraction peak was observed. This fact shows that the crystallographic orientation does not vary with the kind of the base used therein.

As is apparent from the above description, in the case that the surface of the coating layer is exposed to oxygen after the coating layer was dry-etched immediately before film formation, the ferromagnetic grain size of the magnetic layer can be reduced with the increase of the quantity of Co to be added to the coating layer of the base without changing the crystallographic orientation of the magnetic layer, thus obtaining a magnetic recording medium having an excellent signal to noise ratio.

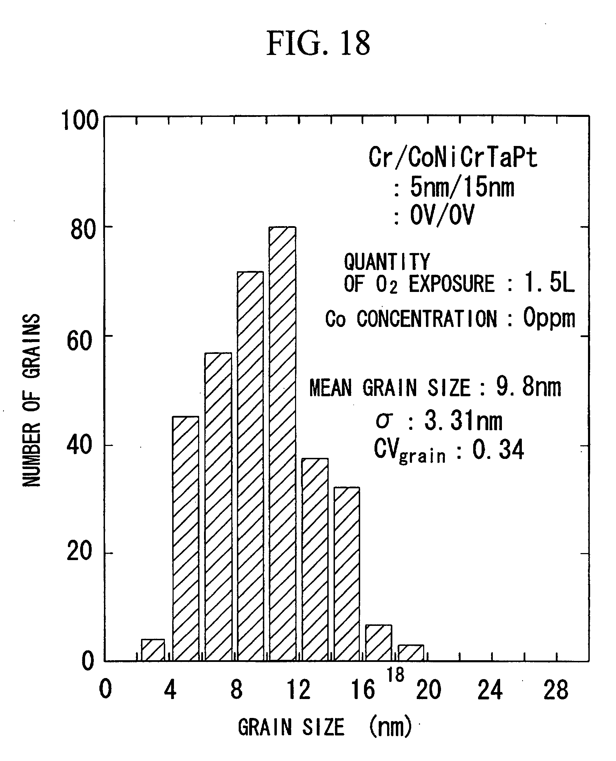

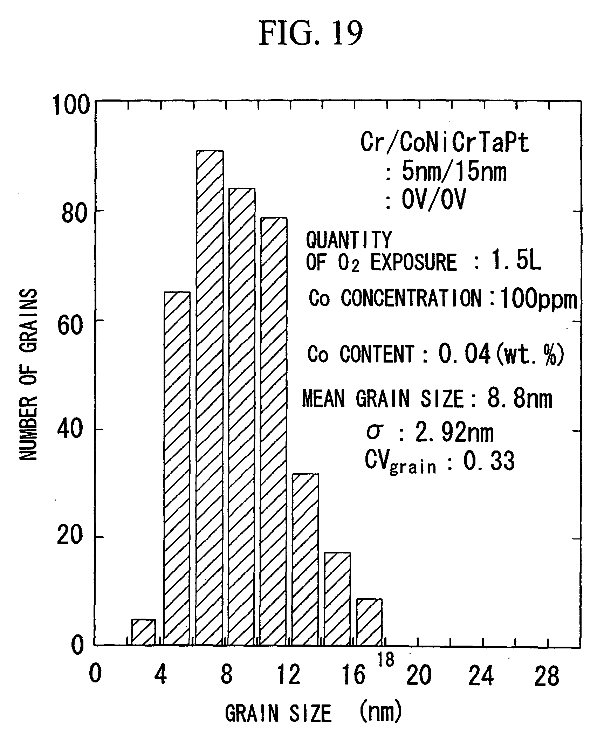

The population distribution of the ferromagnetic grain size of a magnetic layer in a laminated structure of Cr/CoNi_{12.5}Cr₁₅Ta_{3.5}Pt₅ made under the conditions of the quantity of oxygen exposure of 1.5 L and the Co content of 0 using the UC-Process is shown in Fig. 18, while the population distribution of the ferromagnetic grain size of a magnetic layer with the same laminated structure made under the same conditions, except for the conditions of the quantity of oxygen exposure of 3.5 L and the Co content of 0.04% by weight, using the UC-Process is shown in FIG. 19.

As is apparent from a comparison between FIG. 18 and FIG. 19, the mean grain size of the ferromagnetic grains of the medium having coating layer containing Co was reduced and, at the same time, the number of ferromagnetic grains having a grain size which exceeds the mean grain size is reduced. Particularly, coarse ferromagnetic grains having a grain size which is two or more times larger than the mean grain size (grains having a grain size of 17.6 nm which is two times larger than the mean grain size of 8.8 nm, in other words, grains having a grain size of 18 nm or more in FIG. 19) do not exist.

The fact that the number of the coarse ferromagnetic grains can be reduced by Co addition means that the noise of the magnetic layer could be reduced.

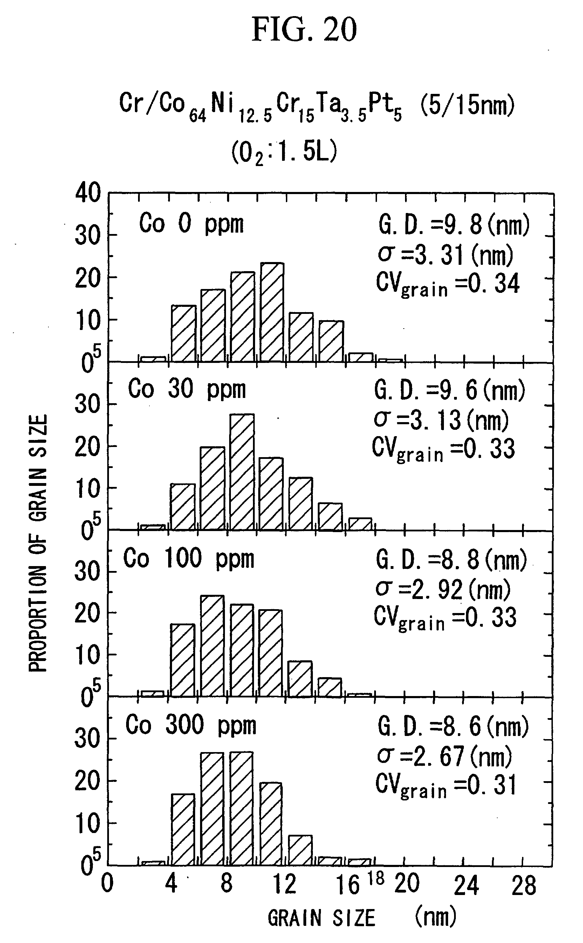

FIG. 20 shows a population distribution of ferromagnetic grains in the respective samples wherein the quantity of oxygen exposure is fixed-to 1.5 L and the quantity of Co addition is adjusted to 0, 0.003% by weight, 0.04% by weight, and 0.13% by weight. As is apparent from FIG. 20, ferromagnetic grains are refined, and the number of coarse ferromagnetic grains is reduced with the increase of Co addition.

### "Base surface condition dependence and magnetic characteristics"

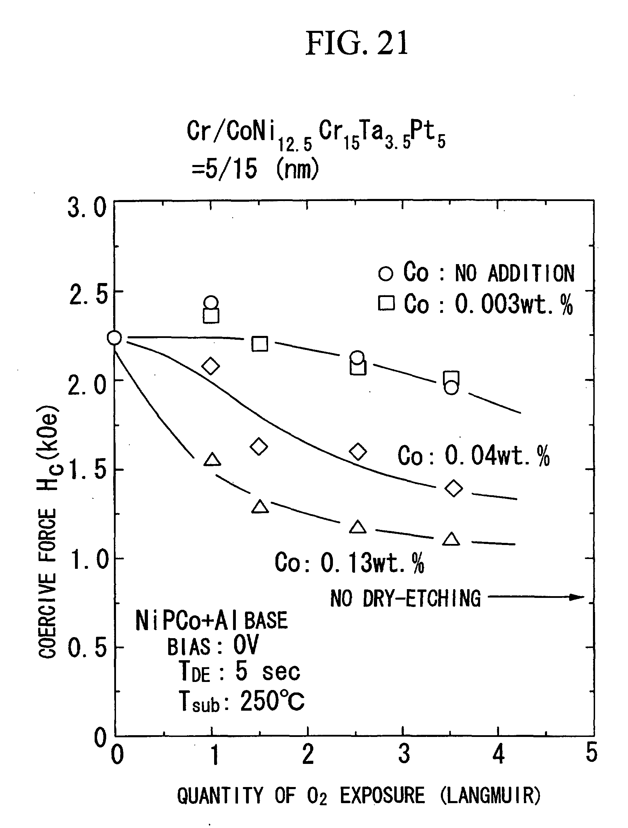

The dependence of the quantity of oxygen adsorption on the coercive force in magnetic recording media with a laminated structure and a composition of Cr/CoNi_{12.5}Cr₁₅Ta_{3.5}Pt₅ obtained by exposing the surface of the coating layer with each quantity of Co addition (0, 0.003% by weight, 0.04% by weight, and 0.13% by weight) to oxygen immediately after sputter etching of the base surface having a Ni-P-Co film and immediately before forming an underlayer of Cr is shown in FIG. 21. The quantity of oxygen exposure was adjusted within a range from 0 L to 3.5 L. The thickness of the underlayer of Cr was fixed to 5 nm, and the thickness of the magnetic layer was fixed to 15 nm.

In any sample shown in FIG. 21, although the coercive force tends to decrease with the increase of the quantity of oxygen to be adsorbed on the base surface, the change is hardly observed in the base wherein the quantity of Co addition is 0 and 0.003% by weight. In a base containing a larger quantity of Co (0.04% by weight and 0.13% by weight) , the coercive force drastically decreases with the increase of the quantity of Co addition. The tendency to decrease tends to asymptotically approach a coercive force value (value where "no dry etching" is described by the arrow in FIG. 11) of the magnetic recording medium which is not subjected to sputter etching with the increase of the quantity of exposure.

Independent of the quantity of Co is added, all the samples exhibited a higher coercive force than that in case of the sample which is not dry-etched.

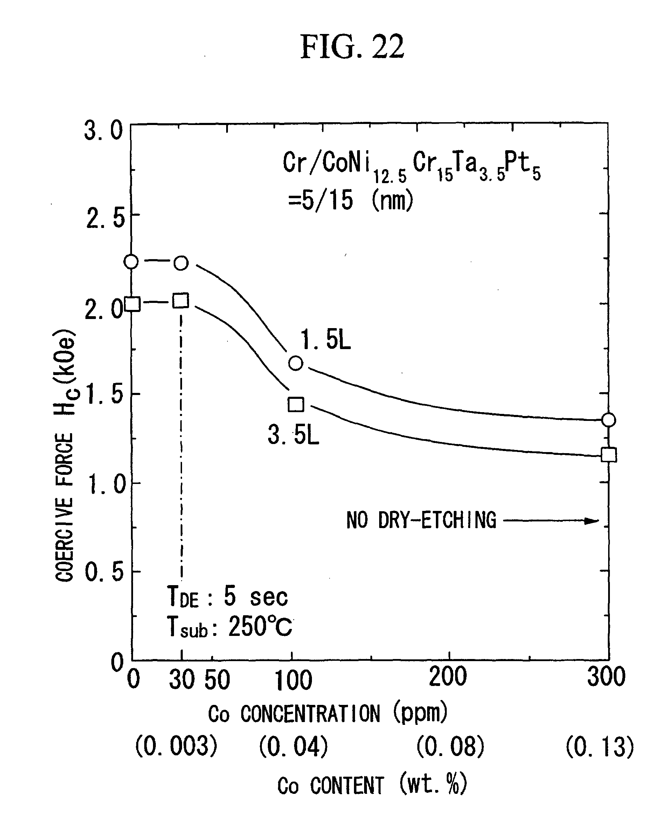

FIG. 22 shows the dependence of the coercive force on the quantity of added Co at 300 K in a magnetic recording media with a laminated structure and a composition of Cr/CoNi_{12.5}Cr₁₅Ta_{3.5}Pt₅ obtained by exposing the base surface with each quantity of added Co (0, 0.003% by weight, 0.04% by weight, and 0.13% by weight) to 1.5 L and 3.5 L of oxygen immediately after conducting dry-etching and immediately before forming an underlayer of Cr.

As is apparent from the results shown in FIG. 22, the coercive force hardly changes in the bases wherein the quantity of addition Co is 0 and 0.003% by weight in comparison to the base wherein the quantity of Co addition is 0% by weight. In a base containing a larger quantity of Co, the coercive force tends to decrease with the increase of the quantity of the addition. Even in the case of the sample of any quantity of added Co, the sample exhibited a higher coercive force than the case of the sample which is not dry-etched.

As shown in the X-ray profile of FIG. 17, it is believed that the decrease of the coercive force with the increase of the quantity of added Co is caused by an influence of thermal agitation as a result of the refinement of ferromagnetic grains and the increase of intergranular interactions because the crystallographic orientation does not change with various kinds of bases.

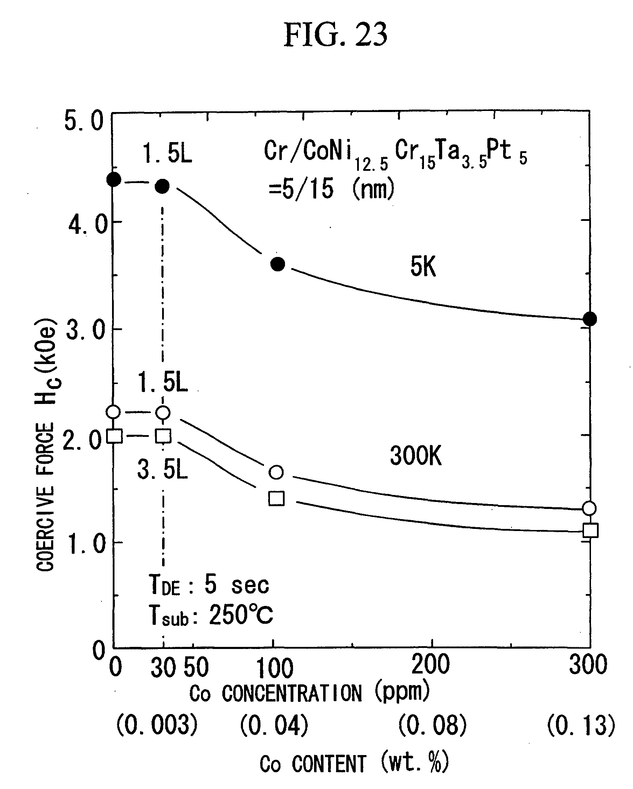

FIG. 23 shows the dependence of the coercive force on the quantity of added Co at 5 K and 300 K in magnetic recording media with a laminated structure of Cr/CoNi_{12.5}Cr₁₅Ta_{3.5}Pt₅ obtained by exposing the base surface with each quantity of added Co (0, 0.003% by weight, 0.04% by weight, 0.13% by weight) to 1.5 L and 3.5 L of oxygen immediately after conducting dry-etching of the base surface and immediately before forming an underlayer of Cr.

As is apparent from the results shown in FIG. 23, the coercive force decreases with the increase of the quantity of added Co in the sample at 5 K, which is considered to be free from the influence of thermal agitation. Therefore, it is considered that the decrease of the coercive force at 300 .K is not only caused by the influence of thermal agitation, but also the increase of interactions between ferromagnetic grains . This reason is believed to be that the larger quantity of oxygen is adsorbed on Co grains on the surface of the coating layer in the substrate wherein the quantity of.added Co is 0.04% by weight and 0.13% by weight as compared with the coating layer free from added Co and the coating layer wherein the quantity of Co addition is 0.003% by weight and that the surface condition thereof is almost the same as in case the base surface is not subjected to dry-etching. It is also believed that a large amount of an adsorbed gas suppresses segregation of Cr and remains. in the film.

As is apparent from the above description, ferromagnetic grains can be reduced by using a base with a coating layer wherein the quantity of added Co is preferably 0.13% by weight or less without exerting an adverse influence on the crystallographic orientation and increasing intergranular interactions when the quantity of oxygen exposure of the surface of the coating layer is about 3.5 L or less. It has also be found that, when using a base with a coating layer wherein the quantity of added Co is 0.04% or more by weight, the ferromagnetic grain size can be drastically reduced even in the case of a small quantity of oxygen exposure of the base surface, though intergranular interactions tend to be increased.

### "Base surface condition and read/write performance"

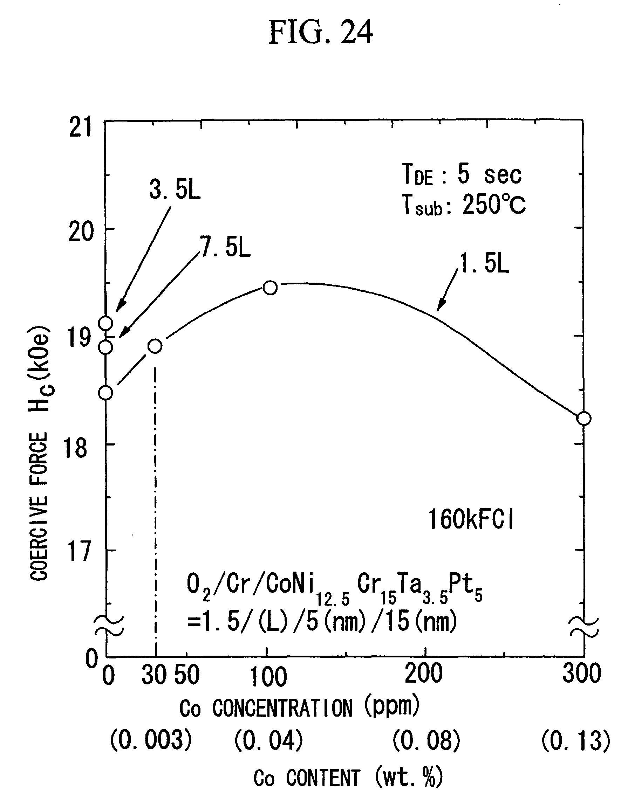

The signal to noise ratio (S/Nₘ) of magnetic recording media with a laminated structure and a composition of Cr/CoNi_{12.5}Cr₁₅Ta_{3.5}Pt₅ is shown in FIG. 24, with respect to the kinds of a coating layer of a base (quantity of Co addition: 0.003% by weight, 0.04% by weight, and 0.13% by weight).

Using the film forming process wherein the base surface was exposed to 1.5 L of oxygen, the thickness of the Cr underlayer was adjusted to 5 nm, and the thickness of the magnetic layer was adjusted to 15 nm. The read/write performance of the magnetic recording media obtained by using the base wherein the Ni-P coating layer does not contain Co and the quantity of oxygen exposure was 3.5 L and 7.5 L are also shown in FIG. 24.

As is apparent from the results shown in FIG. 24, the read/write performance are improved and the signal to noise ratio reaches a maximum value at the quantity of added Co of about 0.04 by weight (improvement of 1 dB or more) by increasing the quantity of added Co. The reason is believed to be as follows. Although intergranular interactions of ferromagnetic grains tend to increase at 0.04% by weight, the signal to noise ratio can be improved when the grain size of ferromagnetic grains is drastically reduced. Therefore, a magnetic recording medium having a good S/N ratio can be obtained by adding Co to the Ni-P coating layer of the base surface.

### "Summary of oxygen adsorption dependence"

It became apparent that ferromagnetic grains can be refined without causing a degradation of the crystallographic orientation or the increase of intergranular interactions between ferromagnetic grains in the oxygen exposure of the base surface using a base with a Co-free Ni-P coating layer and the oxygen exposure within a range from 1.5 L to 3.5 L. Although an oxygen exposure of more than 3.5 L refines magnetic grains, the coercive force tends to be decreased by an increase in intergranular interactions. It has been found that the read/write performance can be improved by about 1 dB in terms of signal to noise ratio by the oxygen exposure.

### "Dependence of base surface condition"

It became apparent that, when the quantity of oxygen exposure onto the base surface is 3.5 or less, use of a base with added Co in the quantity of 0.003% or less by weight relative to the Ni-P coating layer can reduce the ferromagnetic grain size without exerting an adverse influence on the crystallographic orientation or enlarging intergranular interactions. It has also been found that, when the quantity of oxygen exposure onto the base surface is small, use of a base with added Co in the quantity of 0.04% or more by weight relative to the Ni-P coating layer can drastically reduce the ferromagnetic grain size. It has also been found that the read/write performance can be improved by about 1 dB in terms of signal to noise ratio by adding Co to the base surface.

Consequently, it became apparent that the ferromagnetic grain size can be reduced to 9. 9 nm from 10.8 nm without enhancing the crystallographic orientation and intergranular interactions by subjecting the coating layer on the base surface to sputter etching and exposure to oxygen within a range from about 1.5 L to 3.5 L, and that the ferromagnetic grain size can be reduced to 9.6 nm from 9.8 nm by adding 0.003% by weight of Co to the Ni-P amorphous coating layer. It also became apparent that the read/write performance can be improved by about 1.5-2.0 dB in terms of the signal to noise ratio by using a base with added Co in the quantity of 0.04% or less by weight relative to the Ni-P coating layer and adjusting the quantity of oxygen exposure onto the base surface under the conditions of a fixed Cr underlayer thickness and a fixed magnetic layer thickness. Since a good value of the signal to noise ratio can be obtained at the Co quantity of 0.08% or less by weight, it is believed that the Co content to the coating layer is adjusted to 0.08% or less by weight, preferably within a range from 0.003 to 0.08% by weight, and the quantity of oxygen exposure is adjusted to 3.5 L or less, preferably within a range from 0.1 L to 3.5 L, so as to obtain a magnetic recording medium having an excellent signal to noise ratio, taking a slight decrease in the coercive force into account.

The coating layer may not have a single-layer structure, but may also have a multi-layer structure. It is also possible to fabricate a structure suited for refinement and uniformity (the distribution state of adsorbed oxygen gas) by using an Ni-P film as a lower coating layer, forming thereon a film as an upper coating layer by sputtering a material containing an element which is easy to bond with oxygen, and exposing the surface of the upper coating layer to oxygen. The present invention also includes such an embodiment.

Finally, the results of the stress measurement is obtained by using a strip stress measuring device.
Co content: 0.001% by weight: -9.28 kg/mm²
Co content: 0.003% by weight: -8.45 kg/mm²
Co content: 0.01% by weight: -7.27 kg/mm²
Co content: 0.04% by weight: -2.64 kg/mm²
Co content: 0.13% by weight: +2.27 kg/mm²

It has been found from this relationship that the stress of the Ni-P film shifts to the tensile stress side with the increase of the quantity of Co to be added to the Ni-P coating layer.

In the following embodiments, the test was performed by using an ultra clean process wherein the content of H₂O was controlled to 1 ppb or less under high vacuum of 3 X 10⁻⁹ Torr, unless otherwise stated. The base temperature was adjusted to 250°C and the conditions of dry-etching were adjusted to 2 mmTorr, 200 W, and 5 seconds.

### "Analysis results in base depth direction"

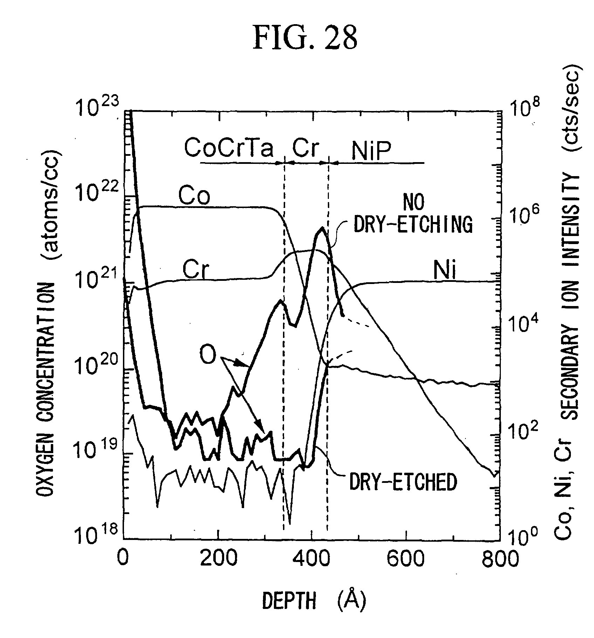

Using magnetic recording media obtained by forming a coating layer made of NiP on the aluminum disk-shaped base, and forming thereon a Cr underlayer 100 Å in thickness, a magnetic layer 280 Å in thickness with a composition of CoCr₁₇Ta₅ and a carbon protective layer 100 Å in thickness. Samples obtained by dry-etching the surface of the NiP coating layer and samples free from dry-etching were prepared, and these samples were subjected to depth analysis by SIMS (secondary ion mass spectrometry). The results are shown in FIG. 28.

As is apparent from FIG. 28, the oxygen concentration of the samples subjected to dry-etching was drastically reduced as compared with the samples free from dry-etching. This suggests that, in the case that the surface is not cleaned by dry-etching, a significant quantity of uncontrollable oxygen atoms are present on the surface as a result of the adhesion of oxides onto the surface of NiP coating layer, thereby making it impossible to control satisfactorily the oxygen trap which serves as a good pinning site, and which is an object of the present invention.

Then, the grain size and the coercive force of Co grains of the CoCrTa magnetic layer of the respective samples. As a result, the grain size was 10.8 nm and the coercive force was 2.26 kOe in case of the samples subjected to dry-etching, whereas, the grain size was 7.4 nm and the coercive force was 0.82 kOe in case of the samples free from dry-etching.

As is apparent from the above description, dry-etching can drastically improve the coercive force, although the grain size of the Co grains increases. Therefore, it has been found that a better magnetic recording medium can be obtained by further refining the grain size. The embodiments of the present invention described above are made based on the knowledge of dry-etching.

### "Quantity of oxygen exposure and determination of magnetic characteristics"

Samples obtained by using the same base as used in the above embodiment, subjecting the surface of the NiCoP coating layer to a dry-etching treatment and exposing to oxygen under the conditions of 3.5 L and samples free from oxygen exposure (quantity of oxygen exposure: OL) were prepared, and then a Cr underlayer of 5 nm in thickness, a magnetic layer of 15 nm in thickness with a composition of CoCr₁₇Ta₅ and a carbon protective layer of 10 nm in thickness were formed on each sample to obtain magnetic recording media.

In these samples, the Co grain size of the samples made at the quantity of oxygen exposure of 0 was 10.8 nm, while the Co grain size of the samples made at the quantity of oxygen exposure of 3.5 L was 9.3 nm, thus making it possible to realize the grain refinement.

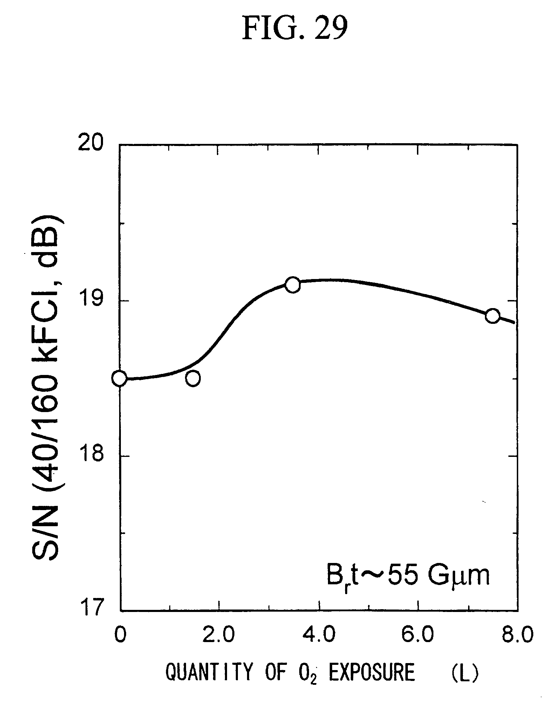

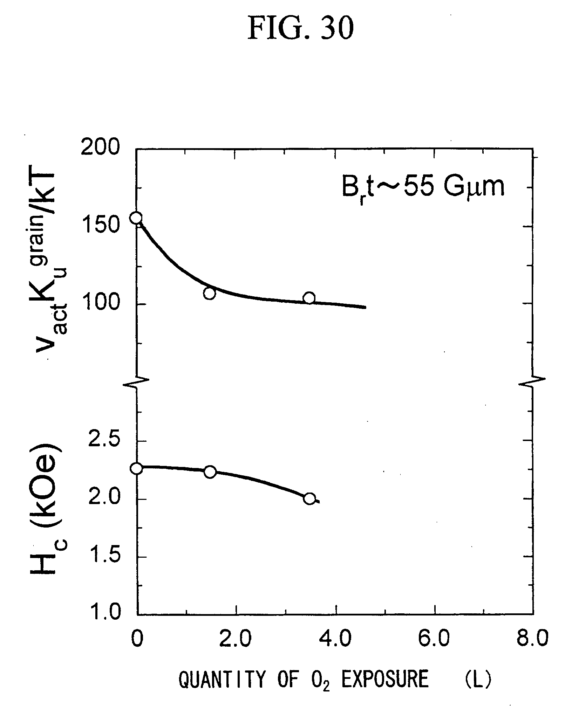

The measurement results of the S/N ratio of the respective samples of magnetic recording media made by changing the quantity of oxygen exposure to 1.5 L, 3.5 L and 7.5 L are shown in FIG. 29, and the measurement results of the coercive force of the respective samples and the measurement results of V_{act}Ku^{grain}/kT (index showing thermal fluctuation constants of magnetic recording medium) of the respective samples are shown in FIG. 30.

As shown in FIG. 29, the S/N ratio can be increased from 18.5 to maximum 19.1 dB (quantity of O₂ exposure: 4 L) by the increase of the quantity of oxygen exposure. This is identical to the fact that the media noise can be reduced from 4.8-4.56 *µ* Vᵣₘₛ to 4.80 *µ* Vᵣₘₛ in view of the media noise. As is apparent from the results shown in FIG. 30, the coercive force is reduced from 2.26 kOe to 2.00 kOe.

This is because V_{act}Ku^{grain}/kT (index showing thermal fluctuation constants of magnetic recording medium) is reduced from 156 to 104 (where V_{act} is an activated magnetic volume and corresponds to a volume where a cluster of magnetic grains switch/act collectively, Ku^{grain} is a magnetocrystalline anisotropy energy constant and an index which indicates a potential energy of a magnetic material, k is the Boltzmann constant, and T is an absolute temperature). In the magnetic recording medium suggested recently, the principal reason for the reduction of V_{act}Ku^{grain}/kT is that the grain size is drastically reduced and V_{act} is also drastically reduced due to exposure to oxygen after dry-etching the base. In the case that the value of V_{act}Ku^{grain}/kT decreases, for example, to 100 or less, the influence of thermal agitation is likely to be strongly exerted to cause problems such as the reduction of the coercive force and the disappearance of the recording. However, with respect to a current magnetic recording medium, V_{act}Ku^{grain}/kT = 104 is a population value which does not cause a large problem. It is believed that a further improvement in characteristics can be easily realized by selecting a magnetic material having a larger Ku^{grain}.

Based on these test results, samples of magnetic recording media were made after forming an NiCoP coating layer on the surface of an aluminum base, and the test of measuring these magnetic recording media was conducted.

### "Quantity of oxygen exposure and determination of magnetic characteristics"

Magnetic recording media were made by using a Co-precipitated substrate obtained by adding 400 ppm of Co to the coating layer of the same substrate as that used in the above embodiment and a substrate free from added Co, subjecting to dry-etching under the same conditions as those in the above embodiment, exposing to oxygen under the conditions of 1.5 L, forming a magnetic layer of CoCrTaNiPt of 15 nm in thickness, and forming a carbon protective layer, and then the Co grain size in each magnetic layer of these samples of magnetic recording media was measured.

As a result, the grain size of the samples free from added Co was 9.8 nm, while the grain size of the samples containing added Co was 8.8 nm.

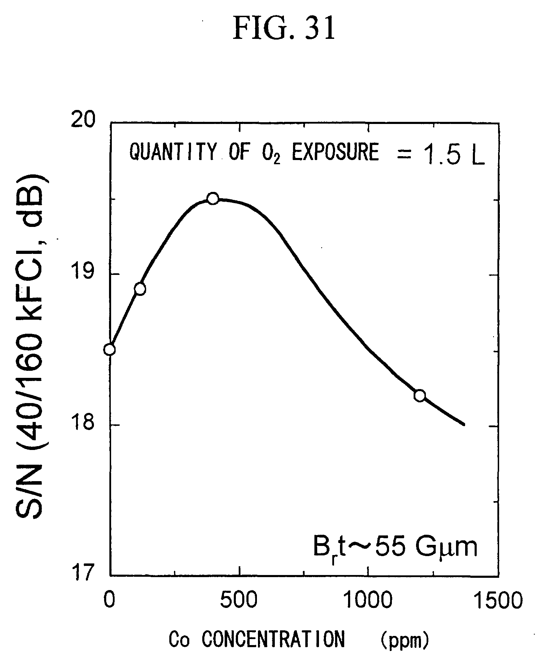

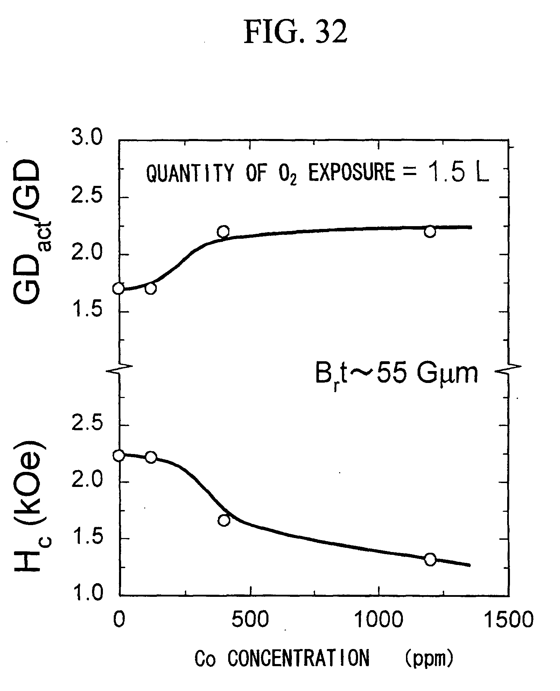

The measurement results of the S/N ratio of the samples wherein the quantity of added Co was respectively set to 0, 120, and 1200 ppm, in addition to the same samples, are shown in FIG. 31, and the measurement results of the coercive force and the measurement results of magnetic intergranular interactions index GD_{act}/GD are shown in FIG. 32.

It has been found from these results that the S/N ratio can be increased (the S/N ratio was reduced to 18.5 dB in the case of the samples free from Co and S/N ratio was reduced to 19.5 dB in the case of the samples containing 400 ppm of Co) by adjusting the Co concentration even if the quantity of oxygen exposure is fixed and the reduction of the coercive force and the increase of magnetic intergranular interactions can be drastically suppressed and, at the same time, the ratio S/N of the medium can be improved.

### "Quantity of oxygen exposure and determination of magnetic characteristics"

Samples of magnetic recording media were obtained by preparing samples wherein the Co-NiP coating layer on the aluminum base surface is not textured but mirror-finished and then dry-etched or not, and samples exposed to oxygen or not, forming thereon an underlayer having a two-layer structure comprising a Cr film of 5 nm in thickness and a CrMo film of 5 nm in thickness, which are laminated to each other, forming thereon a magnetic film of CoCr₂₄Pt₁₂B₄ of 20 nm in thickness and forming a carbon protective layer of 7 nm in thickness. The underlayer having a two-layer structure was used in these samples taking the crystallographic orientation with the magnetic layer with a composition of CoCr₂₄Pt₁₂B₄, which is laminated thereon, into account. By using this underlayer having a two-layer structure, the crystallographic orientation with the magnetic layer with a composition of CoCr₂₄Pt₁₂B₄ is improved, thus making it possible to obtain good magnetic characteristics.

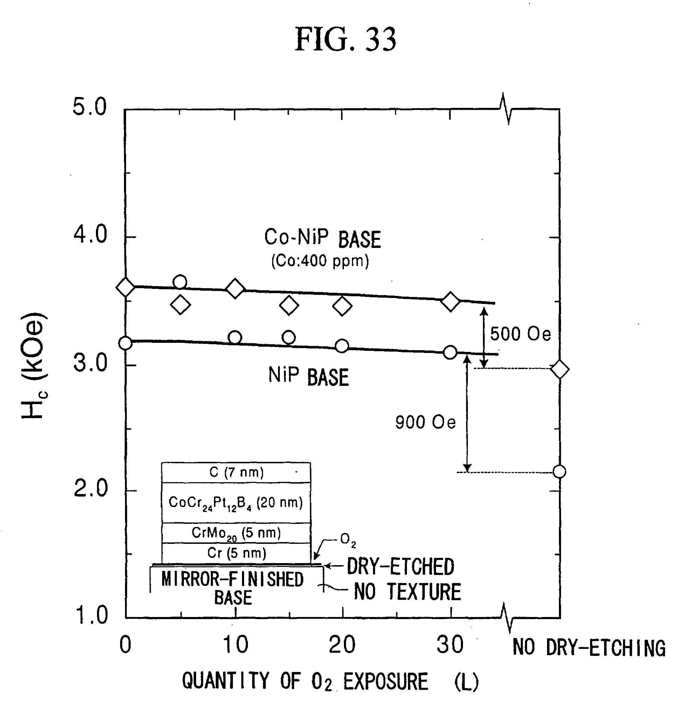

The dependence of the coercive force on the quantity of the oxygen exposure in these samples is shown in FIG. 33.

As is apparent from the results shown in FIG. 33, the coercive force the samples wherein 400 ppm of Co was added and dry-etching was conducted increased sufficiently, while the samples free from Co exhibited a coercive force smaller than that of the above samples and the samples free from dry etching exhibited a coercive force far smaller than that of the above samples. It has been found that the coercive force was hardly reduced even if the quantity of oxygen exposure is adjusted to 30 L. Therefore, it became apparent that the quantity of oxygen exposure can be appropriately selected within the range of 30 L or less, taking other magnetic characteristics into account. In the above embodiments, a magnetic layer with a composition of a small content of Cr and Pt was used as the magnetic layer. In contrast, according to this embodiment, the segregation of Cr around Co grains in the magnetic layer is promoted and magnetic interactions between Cr ferromagnetic particles are controlled by employing a composition of CoCr₂₄Pt₁₂B₄ containing a sufficient quantity of Cr added therein and, furthermore, the coercive force was enhanced by adding a sufficient amount of Co.

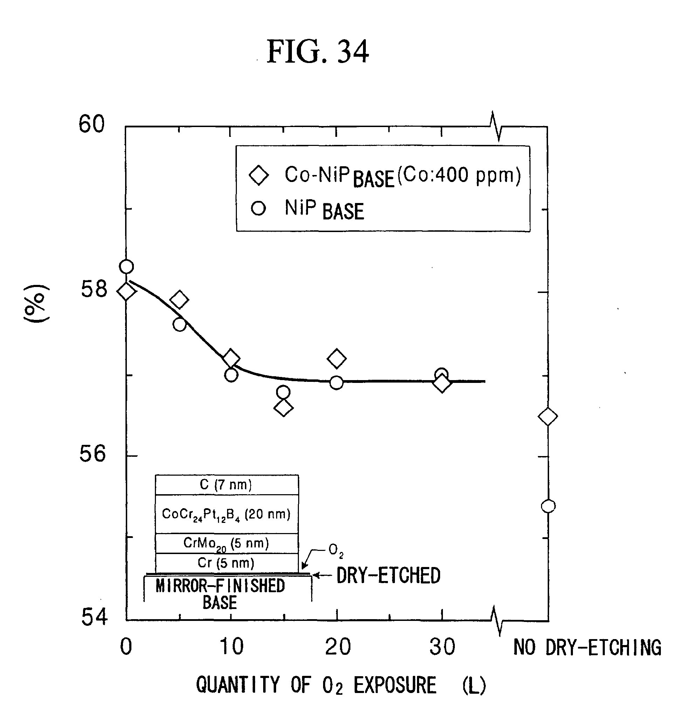

FIG. 34 shows the resolution dependence on the quantity of O₂ exposure in the samples having the same multi-layer structure.

The samples wherein Co was added to the coating layer (Co-NiP base) and samples wherein Co is not added (NiP base) are almost the same in resolution. This is because the coercive force was enhanced by drastically reducing the magnetic intergranular interactions between Cr ferromagnetic grains and suppressing the thermal agitation effect due to a sufficient quantity of Pt addition.

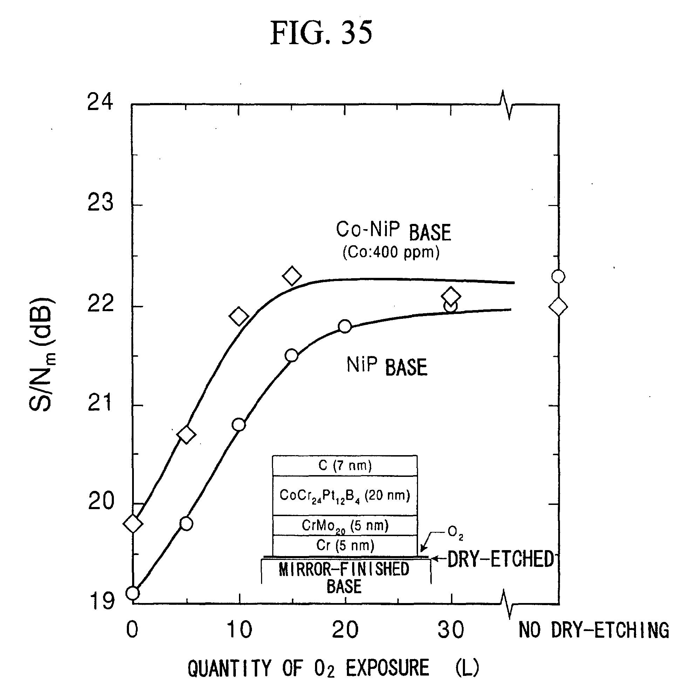

FIG. 35 shows a graph showing the relationship between the quantity of the oxygen exposure and the S/N ratio, which is obtained by plotting these results. As is apparent from these results shown in this drawing, a good S/N ratio can be obtained by increasing the quantity of oxygen exposure.

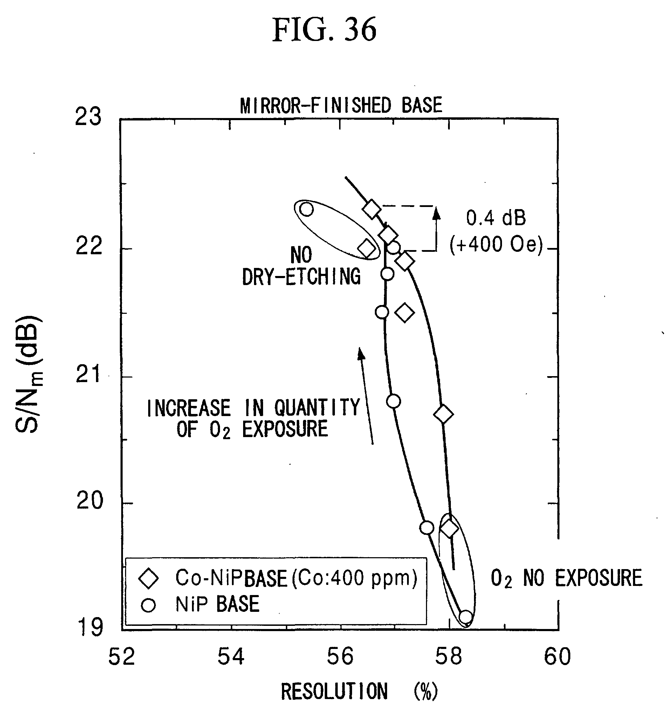

FIG. 36 is a graph showing the relationship between the S/N ratio and the resolution, which is obtained by plotting these results. It became apparent from the results shown in this drawing that the S/N ratio of the samples subjected to dry-etching can reach the same level as that of the samples free from dry-etching by increasing the quantity of oxygen exposure and, therefore, the S/N ratio of the samples subjected to dry-etching can also be improved to a good level.

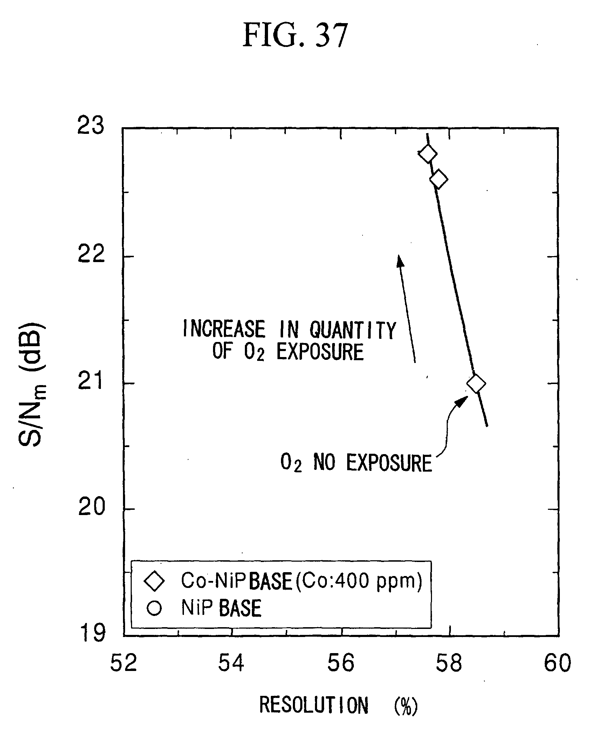

FIG. 37 is a graph showing the relationship between the resolution and the S/N ratio. As is apparent from the relationship of this drawing, the S/N ratio can be improved without lowering the resolution.

As is apparent from the test results described above, samples of magnetic recording media subjected to dry-etching have a high coercive force and, therefore, there can be provided magnetic recording media having a high coercive force, low noise and higher resolution.

### INDUSTRIAL APPLICABILITY

As described above, according to the substrate for magnetic recording medium of the present invention, said substrate for magnetic recording medium having a non-magnetic coating layer containing an element which is capable of co-precipitating with Ni and has high affinity with oxygen on the surface, it is made possible to refine grains of the underlayer by the additional effect of the additive element contained in the coating layer, thereby to refine grains of the magnetic layer in case the magnetic recording medium is produced by forming the underlayer and magnetic layer on the coating layer. Accordingly, use of the magnetic recording medium of the present invention has an effect capable of obtaining a magnetic recording medium provided with a magnetic layer having a small grain size and a low noise.

As the coating layer, for example, a coating layer obtained by adding one or more elements selected from Co, W, Fe, V, Cr, Mn, Cu, Zn, Mo, Pd, Sn, Re, Al, Zr, B, and Ti can be used and a coating layer made of any of Ni-P-Co, Ni-Ta-Co and Ni-Ti-Co alloys can be applied. Furthermore, those with a composition represented by the composition formula: NiCoPM (provided that an element M consists of one or more elements selected from Ti, Zr, Hf, V, Nb, Mo, Ta, W, Al, and B) can be used.

In the case that oxygen is intermittently adsorbed on the surface of the coating layer, grains of the underlayer can be refined in the case that the underlayer is formed on oxygen adsorbed intermittently and, furthermore, grains of the magnetic layer to be formed on the underlayer can be refined.

Since the magnetic recording medium of the present invention has a non-magnetic coating layer containing an element which is capable of co-precipitating with Ni and has high affinity with oxygen on the surface, it is made possible to refine the grains of the underlayer by the additional effect of the additive element contained in the coating layer, thereby to refine the grains of the magnetic layer in the case that the underlayer and magnetic layer are formed on the coating layer.

Accordingly, the magnetic recording medium of the present invention has an effect capable of obtaining a magnetic recording medium provided with a magnetic layer having a small grain size and a low noise.

In case oxygen is intermittently adsorbed on the surface of the coating layer, intermittently adsorption serves as a suppression point for the coarsening the grains, thereby to refine the grains of the underlayer to be formed thereon, and to refine the grains of the magnetic layer to be formed on the underlayer.

According to the magnetic recording medium with a coating layer which contains a predetermined quantity of Co and oxygen adsorbed thereon, or the magnetic recording medium wherein the base surface is treated by an appropriate quantity of oxygen exposure after dry-etching of the surface of the coating layer, it is made possible to refine grains of the magnetic layer, thereby obtaining a magnetic layer having an excellent grain size distribution, which does not include coarse ferromagnetic grains having a mean grain size that is two or more times larger than that of the fine grains. Whereby, a magnetic recording medium having a low noise can be obtained.

Since the method of the present invention is directed to a method of producing a magnetic recording medium comprising a substrate comprising a non-magnetic base and a non-magnetic coating layer formed on said base, and an underlayer, a magnetic layer, and a protective layer, which are formed on said substrate in this order, said method comprising: the pumping step of pumping out a film forming space in which said substrate is formed to a vacuum degree in the order of 10⁻⁹ Torr or less, the cleaning step of introducing an inert gas into said film forming space to generate plasma and subjecting the surface of the coating layer constituting said substrate to a dry-etching treatment, and further comprising: the exposure step of introducing a gas containing at least oxygen into said film forming space so as to attain a pressure higher than the vacuum degree of said pumping step, and exposing the surface of said coating layer to a gas atmosphere containing said oxygen, and the film forming step of depositing said underlayer on the substrate subjected to said exposure step by means of a dry process, it is made possible to completely clean the surface of the coating layer by dry-etching and to adsorb a proper quantity of oxygen thereafter. Oxygen thus adsorbed serves as a suppression point for coarsening grains of the underlayer and, therefore, an underlayer including fine grains can be obtained and a magnetic layer including fine grains can also be obtained.

As the underlayer, those containing Cr are preferable. If a magnetic layer is formed on the underlayer containing Cr, an excellent magnetic layer including refined crystals can be obtained.

In case the Co content suited for the coating layer is selected and a proper range of the quantity of oxygen exposure is selected, there can be obtained a magnetic recording medium provided with a magnetic layer which has a high coercive force, a small grain size, a narrow grain size distribution, less coarse grains, and a low noise.

## Claims

1. A substrate for a magnetic recording medium, comprising a non-magnetic base and a non-magnetic coating layer formed to coat said base, said non-magnetic coating layer containing a metal which is capable of co-precipitating with Ni and has high affinity with oxygen.

2. A substrate for magnetic recording a medium according to claim 1, wherein said metal consists of one or more elements selected from P, Co, W, Fe, V, Cr, Mn, Cu, Zn, Mo, Pd, Sn, Re, Al, Zr, B, Ti, and Ta.

3. A substrate for a magnetic recording medium according to claim 1 or 2, wherein said coating layer.is any one of a Ni-P-Co amorphous film, a Ni-Ta-Co amorphous film, or a Ni-Ti-Co amorphous film.

4. A substrate for a magnetic recording medium according to claim 1, wherein said coating layer is represented by the composition formula of NiCoPM and said M consists of one or more elements selected from Ti, Zr, Hf, V, Nb, Mo, Ta, W, Al, and B.

5. A substrate for magnetic a recording medium according to any one of claims 1, 3, and 4, wherein said coating layer contains 0.003-0.10% by weight of Co.

6. A substrate for a magnetic recording medium according to any one of claims 1 to 5, wherein oxygen is intermittently adsorbed on the surface of said coating layer.

7. A substrate for a magnetic recording medium according to any one of claims 1 to 6, wherein the substrate provided with said coating layer is coated with an underlayer, a magnetic layer, and a protective layer, and a magnetic head runs while flying above said protective layer in a state of facing each other.

8. A magnetic recording medium comprising a substrate comprising a non-magnetic base and a non-magnetic coating layer formed on said base, and an underlayer, a magnetic layer, and a protective layer, which are formed on said substrate, said non-magnetic coating layer containing a metal which is capable of co-precipitating with Ni and has high affinity with oxygen.

9. A magnetic recording medium according to claim 8, wherein said metal consists of one or more elements selected from P, Co, W, Fe, V, Cr, Mn, Cu, Zn, Mo, Pd, Sn, Re, Al, Zr, B, Ti, and Ta.

10. A magnetic recording medium according to claim 1 or 8, wherein said coating layer is any one of a Ni-P-Co amorphous film, a Ni-Ta-Co amorphous film, or a Ni-Ti-Co amorphous film.

11. A magnetic recording medium according to claim 8, wherein said coating layer is represented by the composition formula of NiCoPM, and said M consists of one or more elements selected from Ti, Zr, Hf, V, Nb, Mo, Ta, W, Al, and B.

12. A magnetic recording medium according to any one of claims 8, 10, and 11, wherein said coating layer contains 0.003-0.10% by weight of Co.

13. A magnetic recording medium according to any one of claims 8 to 12, wherein oxygen adsorbed on the surface of said coating layer serves as a pinning point for suppressing coarsening of ferromagnetic grains constituting said magnetic layer.

14. A magnetic recording medium according to any one of claims 8 to 13, wherein oxygen is intermittently adsorbed on the surface of said coating layer and the adsorbed site of said oxygen is located at the grain boundaries of grains constituting said underlayer and, furthermore, said magnetic layer causes epitaxial growth based on said underlayer.

15. A magnetic recording medium comprising a substrate comprising a non-magnetic base and a non-magnetic coating layer formed on said base, and an underlayer, a magnetic layer, and a protective layer, which are formed on said substrate, said magnetic layer having a structure which does not include coarse ferromagnetic grains having a mean grain size which is two or more times larger than that of the ferromagnetic grains constituting the principal portion of the magnetic layer.

16. A method of producing a magnetic recording medium comprising a substrate comprising a non-magnetic base and a non-magnetic coating layer formed on said base, and an underlayer, a magnetic layer, and a protective layer, which are formed on said substrate in this order, said method comprising:
the pumping step of pumping out a film forming space in which said substrate is formed to a vacuum degree on the order of 10⁻⁹ Torr or less, the cleaning step of introducing an inert gas into said film forming space to generate plasma and subjecting the surface of the coating layer constituting said substrate to a dry-etching treatment, and further comprising:
the exposure step of introducing a gas containing at least oxygen into said film forming space so as to attain a pressure higher than the vacuum degree of said pumping step, and exposing the surface of said coating layer to a gas atmosphere containing said oxygen, and the film forming step of depositing said underlayer on the substrate subjected to said exposure step by means of a dry process.

17. A method of producing a magnetic recording medium according to claim 16, wherein a thin film containing a metal, which is capable of co-precipitating with Ni and has high affinity with oxygen, is used as said coating layer.

18. A method of producing a magnetic recording medium according to claim 16 or 17, wherein a thin film, which contains Cr as a principal constituent element, is used as said underlayer.

19. A method of producing a magnetic recording medium according to any one of claims 16 to 18, wherein an Ni-P-Co amorphous film, an Ni-Ta-Co amorphous film, or an Ni-Ti-Co amorphous film is used as said coating layer.

20. A method of producing a magnetic recording medium according to any one of claims 16 to 19, wherein the surface of said coating layer is exposed to an oxygen atmosphere under a predetermined pressure for a predetermined time so that the quantity of exposure of the surface of said coating layer becomes 30. Langmuirs (provided that 1 Langmuir is 1 X 10⁻⁶ Torr · sec) or less in said exposure step.

21. A method of producing a magnetic recording medium according to any one of claims 16 to 20, wherein the quantity of Co contained in said coating layer is adjusted within a range from 0.003 to 0.10% by weight.

22. A magnetic recording device comprising the magnetic recording medium of any one of claims 8 to 15, a driving section for driving said magnetic recording medium, a magnetic head, and a moving means for moving said magnetic head relative to said magnetic recording medium.
